# EUROPÄISCHE PATENTSCHRIFT

(11) **EP 3 551 924 B1**
(45) Veröffentlichungstag und Bekanntmachung des Hinweises auf die Patenterteilung: **17.05.2023**
(21) Anmeldenummer: 17821827.7
(22) Anmeldetag: 07.12.2017
(51) Int. Cl.: F16P 3/14, H02H 3/14, H02H 3/16, H02H 5/12, H02H 1/00, H02H 7/22

(54) **SCHALTSCHRANK MIT SCHUTZSCHALTEINRICHTUNG**
SWITCH CABINET WITH PROTECTIVE SWITCH DEVICE
ARMOIRE DE COMMANDE AVEC DISPOSITIF INTERRUPTEUR DE PROTECTION

(30) Priorität: 09.12.2016 DE 102016123954
(43) Veröffentlichungstag der Anmeldung: 16.10.2019
(73) Patentinhaber: Eaton Intelligent Power Limited, Dublin 4 (IE)
(72) Erfinder: GEGENBAUER, Bernhard, 3830 Waidhofen an der Thaya (AT); REUBERGER, Georg, 3931 Schweiggers (AT)
(74) Vertreter: Eaton IP Group EMEA
(86) Internationale Anmeldenummer: PCT/EP2017/081807
(87) Internationale Veröffentlichungsnummer: WO 2018/104440

(56) Entgegenhaltungen:
- US-A1- 2005 264 427
- US-B1- 9 508 237

## Beschreibung

### TECHNISCHES GEBIET

Die Erfindung betrifft eine elektrische Anlage mit einem Schaltschrank und einen im Schaltschrank angeordneten Schutzschalter. Weiterhin betrifft die Erfindung ein Verfahren zur Sicherung einer solchen elektrischen Anlage und eines in oder an der elektrischen Anlage befindlichen Bedienpersonals.

### STAND DER TECHNIK

Eine solche Vorrichtung und ein solches Verfahren sind grundsätzlich bekannt und werden beispielsweise eingesetzt, um etwa Menschen und/oder die Anlage selbst vor den zerstörerischen Auswirkungen eines in der Anlage oder im Schaltschrank auftretenden Ereignisses zu schützen oder um wenigstens dessen Auswirkungen abzumildern. Beispielsweise kann ein solches Ereignis ein in der Anlage oder im Schaltschrank auftretender, übermäßig hoher Betriebsstrom sein, ein Fehlerstrom über eine fehlerhafte Isolation oder auch ein (Stör)Lichtbogen. Beispielsweise können Tiere oder auch herunterfallendes Werkzeug sowie (feuchter) Schmutz die Isolation beziehungsweise die Funkenstrecke zwischen zwei Leitern auf unterschiedlichem Spannungspotential derart herabsetzen, dass ein (Fehler)strom fließt oder im Extremfall sogar ein Lichtbogen entsteht. Letzteres kann heftige Explosionen aufgrund der sich in kurzer Zeit aufheizenden Luft verursachen.

Häufig werden elektrische Anlagen daher auf das Auftreten eine solchen Störlichtbogens überwacht, was in vielen Fällen durch die Messung des über die elektrischen Leiter fließenden Stroms und die Detektion des emittierten Lichts, das von dem Lichtbogen ausgeht, erfolgt. Sind beide Kriterien erfüllt, dann kann ein Alarmsignal ausgegeben werden, beziehungsweise ein Schaltsignal zum Schließen einer Verbindung niedriger Impedanz zwischen den genannten Leitern auf unterschiedlichem Spannungspotential, insbesondere eines Schalters zwischen diesen Leitern. Dies hat einerseits zur Folge, dass der Lichtbogen rasch gelöscht wird, andererseits auch, dass sehr hohe Ströme in den Zuleitungen auftreten, welche einen übergeordneten Überstromschalter auslösen, der letztlich die gefährdete Stelle vom Netz trennt. Selbstverständlich kann das genannte Schaltsignal aber auch direkt zum Öffnen eines Schalters oder mehrerer Schalter in den Zuleitungen zum Lichtbogen dienen.

Bekannt sind zudem Schutzschalter, die bei einem Überstrom und/oder einem Fehlerstrom auslösen. Problematisch ist dabei, dass bei den in größeren elektrischen Anlagen oder Schaltschränken auftretenden Betriebsströmen naturgemäß auch höhere Fehlerströme zugelassen werden. Diese liegen zwar für den Betrieb der Anlage noch im Normalbereich, stellen aber unter Umständen eine Gefährdung für die Gesundheit eines Menschen dar.

Personenschutzvorrichtungen sind beispielsweise in den Offenlegungsschriften US 9 508 237 B1 und US 2005/264427 A1 offenbart.

### OFFENBARUNG DER ERFINDUNG

Eine Aufgabe ist es daher, eine verbesserte elektrische Anlage sowie ein verbessertes Verfahren zum Betrieb einer solchen Anlage anzugeben. Insbesondere sollen für den Menschen gefährliche Fehlerströme erkannt und eine unnötige Gefährdung des Menschen vermieden werden.

Diese Aufgabe wird mit einer elektrischen Anlage der eingangs genannten Art gelöst, bei der
- die elektrische Anlage ein Bekleidungsstück mit elektrischen Leitern und eine Strom-Messeinrichtung zur Messung des über die genannten elektrischen Leiter fließenden Stroms umfasst, wobei beim Tragen des Bekleidungsstücks von einer in der elektrischen Anlage befindlichen Person ein Fehlerstrom im Wesentlichen über die elektrischen Leiter des Bekleidungsstücks und nur zu einem geringen Teil über den Körper der gennanten Person fließt,
- die Strom-Messeinrichtung mit dem Schutzschalter drahtlos oder drahtgebunden wirkverbunden ist und
- die Strom-Messeinrichtung dazu ausgebildet ist, den Schutzschalter bei Erkennung eines über einem Schwellwert liegenden Messwerts auszulösen beziehungsweise auszuschalten.

Die Aufgabe der Erfindung wird auch mit einem Verfahren der eingangs genannten Art gelöst, bei dem
- eine mit dem Schutzschalter drahtlos oder drahtgebunden wirkverbundene Strom-Messeinrichtung der elektrischen Anlage den über elektrische Leiter eines Bekleidungsstücks fließenden Strom ermittelt, wobei beim Tragen des Bekleidungsstücks von einer in der elektrischen Anlage befindlichen Person ein Fehlerstrom im Wesentlichen über die elektrischen Leiter des Bekleidungsstücks und nur zu einem geringen Teil über den Körper der gennanten Person fließt, und
- die Strom-Messeinrichtung den Schutzschalter auslöst beziehungsweise ausschaltet, wenn ein über einem Schwellwert liegender Messwert erkannt wird.

Durch die vorgeschlagenen Maßnahmen kann sichergestellt werden, dass der zu einer Abschaltung respektive Auslösung eines Schutzschalters herangezogene Fehlerstrom keine gesundheitliche Gefahr für eine in beziehungsweise an der elektrischen Anlage befindliche Person darstellt. Insbesondere kann dieser Abschaltung ein anderer (im Speziellen ein niedrigerer) Fehlerstrom zugrunde gelegt werden als ein Fehlerstrom, der im Normalbetrieb der elektrischen Anlage ohne Anwesenheit einer Person zugelassen wird.

Konkret weist ein Bekleidungsstück, welches die in der elektrischen Anlage befindliche Person trägt, elektrische Leiter auf. Beispielsweise kann das Bekleidungsstück als Handschuh, Jacke, Overall, Hose oder Schutzanzug ausgebildet sein, und die elektrischen Leiter können durch elektrisch leitende Drähte, ein elektrisch leitendes Geflecht und/oder durch eine elektrisch leitende Folie gebildet sein, insbesondere durch metallische Drähte, ein metallisches Geflecht und/oder durch eine metallische Folie oder auch durch Kohlenstoff-Drähte, ein Kohlenstoff-Draht-Geflecht und/oder durch eine Kohlenstoff-Folie. Die elektrischen Leiter sind in das Bekleidungsstück eingearbeitet und berühren die Haut der in der elektrischen Anlage befindlichen Person vorzugsweise nicht. Beispielsweise liegt zwischen der Haut und den Leitern eine Schicht aus Baumwollgewebe oder eines anderen elektrisch isolierenden Stoffs. Wenngleich eine Isolation zwischen den elektrischen Leitern und der Person vorteilhaft ist, so können die elektrischen Leiter nichts desto trotz auch auf der Haut der in der elektrischen Anlage befindlichen Person aufliegen.

Der Fehlerstrom fließt hauptsächlich durch die elektrischen Leiter und nur in geringem Maße über die in der elektrischen Anlage befindlichen Person, wodurch diese geschont wird. Die Strommessung selbst kann mit Hilfe eines Strom-Messwiderstands erfolgen, der mit den elektrischen Leitern des Bekleidungsstücks verbunden ist, oder mit Hilfe eines Durchsteckwandlers, welcher ein elektromagnetisches Feld misst, das durch einen durch die elektrischen Leiter des Bekleidungsstücks fließenden Strom hervorgerufen ist.

Vorteilhaft ist es, wenn die elektrische Anlage
a) zusätzlich zwei Messelektroden mit einer dazwischen angeordneten Spannungs-Messeinrichtung zur Messung der zwischen den Messelektroden liegenden Spannung und/oder
b) zusätzlich zwei Messelektroden mit einer dazwischen angeordneten Strom-Messeinrichtung zur Messung des zwischen den Messelektroden fließenden Stroms aufweist.

Der Fehlerstrom wird im Fall a) durch Messen der zwischen den Messelektroden liegenden Spannung ermittelt. Der Fehlerstrom fließt dabei über die in der elektrischen Anlage befindliche Person, beispielsweise über deren Arm, und verursacht wegen des Widerstands des menschlichen Körpers (zirka 800 Ohm) einen Spannungsabfall zwischen den Messelektroden. Überschreitet der Messwert, also die gemessene Spannung, einen bestimmten Schwellwert, welcher einer Gefährdung des Menschen durch den entsprechenden Fehlerstrom zugeordnet ist, so wird der Stromkreis, von welchem die Gefährdung ausgeht, von einer Versorgungsspannung getrennt.

Im Fall b) sind die Messelektroden elektrisch miteinander verbunden, vorzugsweise mit Hilfe eines elektrischen Leiters, dessen Widerstand niedriger ist als der des menschlichen Körpers. Der Fehlerstrom fließt dann zumindest zwischen den beiden Messelektroden hauptsächlich durch den elektrischen Leiter, wodurch die in der elektrischen Anlage befindliche Person geschont wird.

Die Strom-Messeinrichtung kann einen mit den Messelektroden elektrisch verbundenen Strom-Messwiderstand aufweisen oder auch einen Durchsteckwandler, welcher gegebenenfalls auch als Strom-Messzange ausgebildet sein kann. Bei ersterem wird der Fehlerstrom über die am Strom-Messwiderstand abfallende elektrische Spannung ermittelt. Im Grunde weist die elektrische Anlage in diesem Fall somit eine Spannungs-Messeinrichtung auf. Die Grenzen zwischen Spannungs-Messeinrichtung und Strom-Messeinrichtung sind daher fließend. Beim Durchsteckwandler wird dagegen ein elektromagnetisches Feld ermittelt, das durch den zwischen den Messelektroden fließenden Strom verursacht wird. Die Verbindung zwischen den beiden Messelektroden kann bei dieser Messmethode besonders niederohmig ausgeführt werden.

Die vorgeschlagenen Maßnahmen können in einer elektrischen Anlage einzeln oder in Kombination angewandt werden. Generell sollten die in einer elektrischen Anlage befindlichen Personen Schutzkleidung tragen, die mit elektrischen Leitern ausgestattet ist. Berührt die Person leitende Teile der elektrischen Anlage, so fließt ein Fehlerstrom, wie oben erläutert, im Wesentlichen über die elektrischen Leiter der Schutzbekleidung und nur zu einem geringen Teil über den Körper der in der elektrischen Anlage befindlichen Person, wodurch diese geschont wird. Entgegen der Empfehlungen oder auch Vorschriften der Betreiber der elektrischen Anlagen wird die Schutzbekleidung jedoch zeitweise nicht getragen. Beispielsweise werden Schutzhandschuhe ausgezogen, wenn Arbeiten durchgeführt werden müssen, die mit Handschuhen nur schwer erledigt werden können, etwa Einstellarbeiten oder das Einschrauben von Schrauben. Berührt der Arbeiter nun elektrische leitende Teile der elektrischen Anlage, so kann der Fehlerstrom nicht über die (nicht getragene) Schutzkleidung abfließen, sondern fließt über den Körper des Arbeiters. Vorteilhaft greifen nun die in den Fällen a) oder b) vorgeschlagenen Maßnahmen, wodurch es ebenfalls zu einer Abschaltung des Stromkreises kommt, von welchem die Gefährdung ausgeht. Die elektrische Anlage ist somit besonders sicher.

Je nachdem, ob eine Spannungs-Messeinrichtung oder eine Strom-Messeinrichtung eingesetzt wird, ist der für die Auslösung beziehungsweise Ausschaltung des Schutzschalters vorgesehene Schwellwert ein Spannungs- Schwellwert (wenn eine Spannungs-Messeinrichtung eingesetzt wird) oder ein Strom- Schwellwert (wenn eine Strom-Messeinrichtung eingesetzt wird). Im Rahmen der Offenbarung wird vereinfacht der Begriff "Schwellwert" verwendet, der je nach Anwendungsfall gedanklich durch den Begriff "Spannungs-Schwellwert" oder "Strom-Schwellwert" ersetzt werden kann.

Insbesondere kann die elektrische Anlage auch so ausgebildet sein, dass
- der Schutzschalter einen Schalteingang zum Auslösen beziehungsweise Ausschalten des Schutzschalters aufweist,
- die Spannungs-Messeinrichtung / Strom-Messeinrichtung einen Steuerausgang aufweist, welcher mit dem Schalteingang des Schutzschalters (wirk)verbunden ist und
   - die Spannungs-Messeinrichtung / Strom-Messeinrichtung dazu ausgebildet ist, den Zustand des Steuerausgangs bei Erkennung eines über einem Schwellwert liegenden Messwerts zu ändern und in Folge den Schutzschalter auszulösen beziehungsweise auszuschalten.

Die elektrische Anlage umfasst dann
- einen Schaltschrank und
- einen im Schaltschrank angeordneten Schutzschalter, welcher einen Schalteingang zum Auslösen beziehungsweise Ausschalten des Schutzschalters aufweist,
wobei
- die elektrische Anlage ein Bekleidungsstück mit elektrischen Leitern und eine Strom-Messeinrichtung zur Messung des über die genannten elektrischen Leiter fließenden Stroms umfasst, wobei beim Tragen des Bekleidungsstücks von einer in der elektrischen Anlage befindlichen Person ein Fehlerstrom im Wesentlichen über die elektrischen Leiter des Bekleidungsstücks und nur zu einem geringen Teil über den Körper der gennanten Person fließt,
- die Strom-Messeinrichtung einen Steuerausgang aufweist, welcher mit dem Schalteingang des Schutzschalters verbunden ist und
- die Strom-Messeinrichtung dazu ausgebildet ist, den Zustand des Steuerausgangs bei Erkennung eines über einem Schwellwert liegenden Messwerts zu ändern und in Folge den Schutzschalter auszulösen beziehungsweise auszuschalten.

Demgemäß ist ein Verfahren zur Sicherung einer elektrischen Anlage von Vorteil, welche einen Schaltschrank umfasst, sowie einen im Schaltschrank angeordneten Schutzschalter, welcher einen Schalteingang zum Auslösen beziehungsweise Ausschalten des Schutzschalters aufweist,
wobei
- eine mit dem Schutzschalter wirkverbundene Strom-Messeinrichtung der elektrischen Anlage den über elektrische Leiter eines Bekleidungsstücks fließenden Strom ermittelt, wobei beim Tragen des Bekleidungsstücks von einer in der elektrischen Anlage befindlichen Person ein Fehlerstrom im Wesentlichen über die elektrischen Leiter des Bekleidungsstücks und nur zu einem geringen Teil über den Körper der gennanten Person fließt,
- die Strom-Messeinrichtung einen Zustand eines Steuerausgangs der Strom-Messeinrichtung ändert, wenn ein über einem Schwellwert liegender Messwert erkannt wird und
der mit dem Schalteingang des Schutzschalters verbundene Steuerausgang den Schutzschalter bei Erkennung des über dem Schwellwert liegenden Messwerts auslöst beziehungsweise ausschaltet.

Eine Kombination mit den Fällen a) und/oder b) ist auch hier dementsprechend möglich.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn der Schutzschalter als Leitungsschutzschalter, als Lichtbogen-Kurzschluss-Schalter oder als kombinierter Leitungs- und Lichtbogen-Kurzschluss-Schalter ausgebildet ist. Diese Schalter sind in einer elektrischen Anlage oft ohnehin bereits für andere Zwecke vorhanden und werden von dem vorgeschlagenen System mitverwendet, wodurch sich ein Doppelnutzen ergibt. "Leitungsschutzschalter" dienen generell dazu, einen Stromkreis bei Erkennung einer Überlast zu trennen. Überlast liegt in der Regel bei Überstrom vor, insbesondere in Zusammenhang mit einem bestimmten Stromanstieg, und/oder bei Übertemperatur, das heißt bei thermischer Überlast. "Lichtbogen-Kurzschluss-Schalter" dienen dazu, zwei oder mehr Leiter auf unterschiedlichem Spannungspotential (zum Beispiel die Phasen und gegebenenfalls einen Nullleiter) kurzzuschließen, um damit einen brennenden Lichtbogen zu löschen. Lichtbogen-Kurzschluss-Schalter werden in aller Regel in Kombination mit einem stromaufwärts liegenden Leitungsschutzschalter angewandt, wodurch eine Schalter-Kaskade entsteht. Wird der Lichtbogen-Kurzschluss-Schalter geschlossen, treten in der Regel so hohe Kurzschlussströme auf, die in Folge zu einer Ausschaltung beziehungsweise Auslösung des Leitungsschutzschalters führen. Die beiden Schalter können generell auch als kombinierter Leitungs- und Lichtbogen-Kurzschluss-Schalter ausgeführt sein. Dabei kann die bereits oben genannte Schaltkaskade wirksam sein, oder die beiden Schalter können im Gefahrenfall auch simultan betätigt werden. Eine Wirkverbindung zur Spannungs-Messeinrichtung / Strom-Messeinrichtung kann nun an einem Leitungsschutzschalter ansetzen und direkt diesen ausschalten/auslösen, oder die Wirkverbindung kann auch am Lichtbogen-Kurzschluss-Schalter ansetzen und diesen bei Gefahr schließen. Der solcherart "simulierte" Lichtbogen führt in Folge wieder zur Auslösung eines stromaufwärts liegenden Leitungsschutzschalters, wenn dieser nicht ohnehin simultan mit dem Lichtbogen-Kurzschluss-Schalter geschaltet wird (wenn z.B. ein kombinierter Leitungs- und Lichtbogen-Kurzschluss-Schalter verwendet wird). Die Spannungs-Messeinrichtung / Strom-Messeinrichtung kann somit mit einem Störlichbogen-Schutzsystem wirkverbunden sein.

Vorteilhaft ist es, wenn die Messelektroden in den Fällen a) und b) für die Befestigung am menschlichen Körper ausgebildet sind, insbesondere auf der Haut des menschlichen Körpers. Dementsprechend werden die Messelektroden für die Durchführung des offenbarten Verfahrens am menschlichen Körper befestigt, insbesondere auf der Haut des menschlichen Körpers, und es wird im Fall a) die am besagten Körper zwischen den Messelektroden abfallende Spannung ermittelt oder im Fall b) der zwischen den Messelektroden fließende Strom. Greift eine Person (unbeabsichtigt) auf Teile der elektrischen Anlage, die eine gefährliche Spannung führen, so fließt über den menschlichen Körper, und insbesondere über den greifenden Arm, ein elektrischer Strom, der durch den Widerstand des menschlichen Körpers (zirka 800 Ohm) einen Spannungsabfall zwischen den Messelektroden verursacht. Überschreitet der Messwert (also die gemessene Spannung oder der gemessene Strom) einen bestimmten Schwellwert, welcher einer Gefährdung des Menschen durch den entsprechenden Fehlerstrom zugeordnet ist, so wird der Stromkreis, von welchem die Gefährdung ausgeht, wie oben beschrieben von einer Versorgungsspannung getrennt.

Besonders vorteilhaft ist es dabei, wenn je eine Elektrode auf je einer Armbinde/Beinbinde angeordnet ist oder wenn beide Messelektroden voneinander beabstandet auf einer einzigen Armbinde/Beinbinde angeordnet sind. Ersteres bietet den Vorteil besserer Beweglichkeit, zweiteres führt zu einer bekannten Beabstandung der Elektroden am menschlichen Körper. Selbstverständlich kann die elektrische Anlage auch mehrere Elektrodenpaare aufweisen, sodass zum Beispiel ein Arbeiter mit mehreren Messelektroden ausgestattet werden kann, oder sodass mehrere Arbeiter mit Messelektroden ausgestattet werden können.

Damit an dem besagten menschlichen Körper keine gefährlichen Spannungspotentiale entstehen können, ist es von Vorteil, wenn die elektrischen Leiter des Bekleidungsstücks mit einem Erdungspotential verbunden werden und gegebenenfalls eine der beiden Messelektroden in den Fällen a) und b) mit einem Erdungspotential verbunden wird oder der besagte menschliche Körper mit Hilfe einer Erdungselektrode mit einem Erdungspotential verbunden wird. Dementsprechend ist es auch von Vorteil, wenn die elektrischen Leiter des Bekleidungsstücks mit einem Erdungspotential verbunden sind und gegebenenfalls eine der beiden Messelektroden in den Fällen a) und b) mit einem Erdungspotential verbunden ist oder die elektrische Anlage eine mit einem Erdungspotential verbundene Erdungselektrode aufweist, welche für die Befestigung am menschlichen Körper ausgebildet ist, insbesondere auf der Haut des menschlichen Körpers. Die Erdungselektrode kann im Speziellen wiederum auf einer Armbinde oder einer Beinbinde angeordnet sein.

Generell ist es von Vorteil, wenn die Messelektroden und/oder die Erdungselektrode an der Innenseite eines Bekleidungsstücks angeordnet sind, insbesondere an einer Jacke, einer Hose, einem Schuh und/oder an einem Handschuh. Auf diese Weise werden einerseits der Arbeiter aber auch die Messelektroden gut geschützt. Im Bereich der Messelektroden und/oder der Erdungselektrode können außen an dem betreffenden Kleidungsstück Spannbändchen angebracht sein, sodass die Messelektroden und/oder die Erdungselektrode fest auf die Haut des menschlichen Körpers aufgedrückt werden können. Solcherart entsteht wiederum eine Art Arm- oder Beinbinde. Die Messelektroden, die Binden, die elektrischen Leiter sowie die Spannungs-Messeinrichtung und die Strom-Messeinrichtung können insbesondere Teil desselben Kleidungsstücks sein.

Besonders vorteilhaft ist es auch, wenn die elektrische Anlage
- zumindest eine mit dem Schutzschalter wirkverbundene optische Auslöseeinrichtung umfasst, welche dazu ausgebildet ist, den Schutzschalter bei Erkennung eines Lichtbogens auszulösen beziehungsweise auszuschalten,
- eine Detektionseinrichtung zur Erkennung eines Zutritts oder eines Zutrittswunsches zu einem gesicherten Bereich der elektrischen Anlage und
- eine elektronische Schaltung, welche mit der Detektionseinrichtung verbunden ist und eine Auslösung beziehungsweise ein Ausschalten des Schutzschalters durch die zumindest eine optische Auslöseeinrichtung bei Erkennung eines Zutritts oder eines Zutrittswunsches ermöglicht und andernfalls verhindert.

Dementsprechend ist es auch ein Verfahren zur Sicherung einer elektrischen Anlage von Vorteil, die zumindest eine mit dem Schutzschalter wirkverbundene optische Auslöseeinrichtung aufweist, welche den Schutzschalter bei Erkennung eines Lichtbogens auslöst beziehungsweise ausschaltet,
wobei
- der Schutzschalter durch die zumindest eine optische Auslöseeinrichtung nur dann ausgelöst beziehungsweise ausgeschaltet wird, wenn ein Zutritt oder ein Zutrittswunsch zu einem gesicherten Bereich der elektrischen Anlage erkannt wird.

Insbesondere kann
- der Schutzschalter einen Schalteingang zum Auslösen beziehungsweise Ausschalten des Schutzschalters aufweisen,
- die zumindest eine optische Auslöseeinrichtung einen Steuerausgang aufweisen, welcher mit dem Schalteingang des Schutzschalters verbunden ist und
- die zumindest eine optische Auslöseeinrichtung dazu ausgebildet sein, den Zustand des Steuerausgangs bei Erkennung eines Lichtbogens zu ändern und in Folge den Schutzschalter auszulösen beziehungsweise auszuschalten.

Eine Gefahr für eine Person kann nicht nur von einem zu hohen Fehlerstrom ausgehen, sondern beispielsweise auch von einem in der elektrischen Anlage auftretenden (Stör)lichtbogen. Durch die oben vorgeschlagenen Maßnahmen wird eine Person nicht nur vor einem zu hohen Fehlerstrom geschützt, sondern auch vor den schädlichen Auswirkungen eines Lichtbogens. Wie eingangs erwähnt, kann es durch die teils sehr hohen bei einem Lichtbogen auftretenden Ströme zu heftigen Explosionen aufgrund der sich in kurzer Zeit aufheizenden Luft kommen.

In der Regel werden Störlichtbögen durch eine optische Auslöseeinrichtungen zur Ausschaltung beziehungsweise Auslösung eines Schutzschalters erkannt, welche im Schaltschrank fix verbaut sind und dort sensible Bereiche überwachen. Beispielsweise kann das von einem Überwachungsbereich ausgehende Licht per Lichtleiter an die optische Auslöseeinrichtung geführt werden.

Bekannt sind auch mobile optische Auslöseeinrichtung zur Ausschaltung beziehungsweise Auslösung eines Schutzschalters. Diese werden in der Regel temporär eingesetzt und können auch außerhalb des Schaltschranks angeordnet werden. Insbesondere kann eine solche optische Auslöseeinrichtung von einer Person getragen werden, um diese zu schützen. Detektiert die von der Person getragene optische Auslöseeinrichtung einen Lichtbogen, so wird der Schutzschalter ausgeschaltet beziehungsweise ausgelöst und schützt die Person vor den Auswirkungen des Lichtbogens. Auf diese Weise können zum Beispiel auch elektrische Anlagen beziehungsweise Schaltschränke geschützt werden, die ansonsten keinen Schutz gegen das Auftreten eines Lichtbogens aufweisen, oder es können Bereiche elektrischer Anlagen beziehungsweise von Schaltschränken geschützt werden, die ansonsten keinen Schutz gegen das Auftreten eines Lichtbogens aufweisen.

Problematisch ist dabei, dass sich die außerhalb des Schaltschranks angeordnete optische Auslöseeinrichtung in der Regel in einem schwer einschätzbaren Umfeld befindet. Beispielsweise können andere Ereignisse als ein Lichtbogen zu einer Fehlauslösung des Schutzschalters führen, zum Beispiel grelle Lichtblitze, von denen an sich keine Gefahr ausgeht.

Ein Beispiel dafür ist eine Blitz einer Fotokamera, mit der ein Bild der elektrischen Anlage gemacht wird, sowie flackernde Lampen und dergleichen. Zudem können in elektrischen Anlagen Lichtbögen auch im normalen Betrieb auftreten, beispielsweise in Form von Schaltlichtbögen beim Trennen eines stromführenden Schaltkontakts. Der Schaltlichtbogen kann direkt sichtbar sein und/oder es kann leuchtenden Gas aus dem Schaltgerät austreten, das von den abbrennenden Schaltkontakten oder Lichtbogenleit- beziehungsweise Lichtbogenlöschblechen des Schaltgeräts stammt.

Blickt die Person in die Richtung des betreffenden Lichtblitzes, beziehungsweise ist die mobile optische Auslöseeinrichtung darauf ausgerichtet, so wird das mit der optischen Auslöseeinrichtung gekoppelte beziehungsweise wirkverbundene Schaltgerät ausgeschaltet/ausgelöst, unabhängig davon, ob von dem Lichtblitz eine potentielle Gefahr ausgeht und unabhängig davon, ob das der optischen Auslöseeinrichtung zugeordnete Schaltgerät den Lichtblitz überhaupt beeinflussen, das heißt löschen kann.

Unter Umständen führen solche harmlose Auslöser zu schwerwiegenden Konsequenzen, beispielsweise wenn mit der elektrischen Anlage sicherheitskritische Verbraucher versorgt werden, die unnötigerweise abgeschaltet werden. Beispiele sind medizinische Anlagen, Computerserver, technische Anlagen mit instabilen Prozessen und dergleichen.

Mit Hilfe der oben vorgeschlagenen optischen Auslöseeinrichtung wird verhindert, dass die optische Auslöseeinrichtung einen Schutzschalter in einem gesicherten Bereich auslöst, von dem gar keine Gefahr ausgeht beziehungsweise in dem sich keine gefährdete Person befindet. Elektrische Anlagen verfügen in aller Regel auch über passiven Schutz, beispielsweise in Form von Abdeckungen, Gehäusen, Verbauten und Schränken. Tritt ein (Stör)lichtbogen in einem solchen geschützten Bereich auf, so besteht für eine Person außerhalb dieses Bereichs in der Regel auch dann keine schwerwiegende Gefährdung, wenn der Lichtbogen nicht oder nicht sofort ausgeschaltet wird. Durch die oben vorgeschlagenen Maßnahmen wird nun sichergestellt, dass die optische Auslöseeinrichtung einen Schutzschalter in einem gesicherten Bereich nur dann auslöst, wenn der auftretende Lichtbogen auch tatsächlich eine Gefahr für jemanden darstellt. Beispielsweise ist ein Schaltlichtbogen innerhalb eines geschlossenen Schaltschranks oder in ausreichender Entfernung an sich harmlos, befindet sich die Person aber beispielsweise mit dem Kopf in direkter Umgebung des Schaltlichtbogens, so können daraus ernste gesundheitliche Konsequenzen resultieren. Die optische Erkennung eines Lichtbogens als solche ist an sich bekannt und kann beispielsweise auf der Intensität und/oder der Spektralverteilung des empfangenen Lichts basieren.

Besonders vorteilhaft ist es, wenn die Spannungs-Messeinrichtung / Strom-Messeinrichtung und die optische Auslöseeinrichtung mit demselben Schutzschalter wirkverbunden sind. Der Vorteil der vorgeschlagenen Maßnahmen tritt dann besonders zu Tage, beziehungsweise ergibt sich ein besonderer synergetischer Nutzen, da ein Schutzschalter für die Gefahrenabwendung zweier unterschiedlicher Störfälle eingesetzt werden kann. Darüber hinaus darf nicht vergessen werden, dass der Schutzschalter, wie eingangs erwähnt, oft ohnehin bereits in einer elektrischen Anlage vorhanden ist, und dort beispielsweise bei einem Überstrom ausschaltet (Leitungsschutzschalter).

Grundsätzlich könnte die optische Auslöseeinrichtung auch mit einem anderen Schutzschalter wirkverbunden sein als die Spannungs-Messeinrichtung / Strom-Messeinrichtung. Insbesondere kommen dabei wieder Leitungsschutzschalter, Lichtbogen-Kurzschluss-Schalter oder kombinierter Leitungs- und Lichtbogen-Kurzschluss-Schalter in Frage. Denkbar ist auch, dass die Spannungs-Messeinrichtung / Strom-Messeinrichtung mit einer ersten Gruppe von Schutzschaltern wirkverbunden ist und die optische Auslöseeinrichtung mit einer zweiten Gruppe von Schutzschaltern. Die beiden Gruppen können im Speziellen auch eine Schnittmenge aufweisen.

Insbesondere kann
g) die zumindest eine optische Auslöseeinrichtung für die Befestigung am menschlichen Körper ausgebildet sein oder
h) die zumindest eine optische Auslöseeinrichtung ist im Schaltschrank oder außen am Schaltschrank angeordnet, oder
i) eine erste optische Auslöseeinrichtung ist für die Befestigung am menschlichen Körper ausgebildet, und eine zweite optische Auslöseeinrichtung ist im Schaltschrank oder außen am Schaltschrank angeordnet.

In den Fällen g) und i) kann die zumindest eine (erste) optische Auslöseeinrichtung insbesondere auf einem Helm, einer Armbinde und/oder auf einem Bekleidungsstück angeordnet sein, im Speziellen auf einer Jacke. Die optische Auslöseeinrichtung kann dabei beispielsweise fix auf dem Helm der Armbinde und/oder auf dem Bekleidungsstück angeordnet sein, oder sie kann bei Bedarf etwa mit einer Klammer oder einem Klett-Streifen temporär an den genannten Gegenständen montiert werden. Im Speziellen kann die optische Auslöseeinrichtung auf derselben Arm-/Beinbinde oder auf demselben Bekleidungsstück wie die Spannungs-Messeinrichtung / Strom-Messeinrichtung angeordnet sein beziehungsweise auf demselben Bekleidungsstück, das mit elektrischen Leitern ausgestattet ist. Im Fall h) kann die (zweite) optische Auslöseeinrichtung ebenfalls eine Klammer aufweisen, oder beispielsweise einen Magneten, mit dem die optische Auslöseeinrichtung an metallischen Bauteilen befestigt werden kann.

Der Vollständigkeit halber wird angemerkt, dass der Begriff "Zutritt" im Rahmen der Erfindung gleichbedeutend mit dem Begriff "Zugriff" ist. Das heißt, ein Gehen ist für den Zutritt zu einem gesicherten Bereich der elektrischen Anlage zwar möglich, streng genommen aber nicht notwendig.

Günstig ist es weiterhin, wenn die elektronische Schaltung als logische UND-Verknüpfung eines positiven Lichtbogensignals der optischen Auslöseeinrichtung und eines Zutritts-Signals der Detektionseinrichtung ausgebildet ist oder als solche wirkt und ausgangsseitig mit dem Schutzschalter wirkverbunden ist. Die UND-Verknüpfung ist also logisch zwischen dem Schutzschalter und der optischen Auslöseeinrichtung eingefügt. Dementsprechend werden ein positives Lichtbogensignal der optischen Auslöseeinrichtung und ein Zutritts-Signals der Detektionseinrichtung logisch UND-verknüpft, und der Schutzschalter wird nur dann durch die optische Auslöseeinrichtung ausgeschaltet beziehungsweise ausgelöst, wenn ein Zutritt oder Zutrittswunsch zu der elektrischen Anlage erkannt wird.

Vorteilhaft ist es darüber hinaus, wenn
d) die Detektionseinrichtung zur Erkennung eines Schließzustands einer Schaltschranktür und/oder einer Zutrittstür zur elektrischen Anlage ausgebildet ist, insbesondere als Schaltkontakt, und die mit der Detektionseinrichtung verbundene elektronische Schaltung dazu ausgebildet ist, eine Auslösung beziehungsweise ein Ausschalten des Schutzschalters durch die zumindest eine optische Auslöseeinrichtung im OFFEN-Zustand der Schaltschranktür/Zutrittstür zu ermöglichen und im GESCHLOSSEN-Zustand der Schaltschranktür/Zutrittstür zu verhindern und/oder
e) die Detektionseinrichtung als manuell betätigbarer Zutrittsschalter zum Schaltschrank und/oder zur elektrischen Anlage ausgebildet ist und die mit der

Detektionseinrichtung verbundene elektronische Schaltung dazu ausgebildet ist, eine Auslösung beziehungsweise ein Ausschalten des Schutzschalters durch die zumindest eine optische Auslöseeinrichtung bei betätigtem Zutrittsschalter zu ermöglichen und andernfalls zu verhindern und/oder
f) die Detektionseinrichtung zur Erkennung der Anwesenheit der optischen Auslöseeinrichtung in einem Gefahrenbereich der elektrischen Anlage ausgebildet ist und die mit der Detektionseinrichtung verbundene elektronische Schaltung dazu ausgebildet ist, eine Auslösung beziehungsweise ein Ausschalten des Schutzschalters durch die zumindest eine optische Auslöseeinrichtung bei im Gefahrenbereich anwesender optischer Auslöseeinrichtung zu ermöglichen und andernfalls zu verhindern.

Im Fall d) wird ein Zutritt beziehungsweise Zugriff dadurch erkannt, dass eine Tür zur elektrischen Anlage oder eine Schaltschranktür geöffnet wird. Insbesondere ist die Tür zur elektrischen Anlage respektive die Schaltschranktür mit einem Schaltkontakt ausgestattet. Alternativ oder zusätzlich kann ein manuell betätigbarer Zutrittsschalter vorgesehen sein, dessen Schaltzustand ausgewertet wird, um eine Auslösung beziehungsweise ein Ausschalten des Schutzschalters durch die zumindest eine optische Auslöseeinrichtung zu ermöglichen oder nicht (Fall e). Beispielsweise kann der Zutrittsschalter mit einem Schloss gekoppelt sein, das eine Tür zur elektrischen Anlage respektive eine Schaltschranktür verschließt. Wird der Zutrittsschalter betätigt, so öffnet sich das Schloss und auch die optische Auslöseeinrichtung wird freigegeben. Das heißt, ein Ausschalten des Schutzschalters durch die zumindest eine optische Auslöseeinrichtung wird ermöglicht. Als weitere Alternative oder zusätzliche Möglichkeit kann vorgesehen sein, dass die Anwesenheit der optischen Auslöseeinrichtung in einem definierte Gefahrenbereich überprüft wird. Ist die optische Auslöseeinrichtung im Gefahrenbereich, so ist ein Ausschalten des Schutzschalters durch die zumindest eine optische Auslöseeinrichtung grundsätzlich möglich. Ist die optische Auslöseeinrichtung außerhalb des Gefahrenbereichs, so ist dies nicht möglich.

Besonders vorteilhaft ist es im Zusammenhang mit dem oben genannten Fall f), wenn die Detektionseinrichtung als drahtloser Detektions-Empfänger ausgebildet oder mit einem drahtlosen Detektions-Empfänger verbunden und dazu ausgebildet ist, die optische Auslöseeinrichtung als anwesend in einem Gefahrenbereich zu erkennen, wenn ein von der optischen Auslöseeinrichtung verursachtes Sendesignal eine über einem Feldstärke-Schwellwert liegende Empfangsfeldstärke im Detektions-Empfänger hervorruft. Dementsprechend wird der Schutzschalter nur dann durch die optische Auslöseeinrichtung ausgeschaltet beziehungsweise ausgelöst, wenn die optische Auslöseeinrichtung als anwesend in einem Gefahrenbereich erkannt wird, das heißt wenn ein von der optischen Auslöseeinrichtung verursachtes Sendesignal eine über einem Feldstärke-Schwellwert liegende Empfangsfeldstärke im Detektions-Empfänger hervorruft. Der Gefahrenbereich, in dem sich die optischen Auslöseeinrichtung befinden muss, um den Schutzschalter auslösen zu können, muss nicht notwendigerweise mit dem Empfangsbereich eines mit dem Schalteingang des Schutzschalters gekoppelten drahtlosen Empfängers übereinstimmen. Für eine korrekte Funktion ist es zwar notwendig, dass der genannte Empfangsbereich des mit dem Schutzschalter gekoppelten Empfängers den Gefahrenbereich abdeckt, er kann aber auch darüber hinausgehen.

Günstig ist es weiterhin, wenn die elektrische Anlage
- eine Betriebsstrom-Messeinrichtung zur Messung eines durch den Schutzschalter oder durch die elektrische Anlage fließenden Stroms aufweist sowie,
- eine elektronische Schaltung, welche mit der Betriebsstrom-Messeinrichtung verbunden ist und eine Auslösung beziehungsweise ein Ausschalten des Schutzschalters durch die optische Auslöseeinrichtung nur bei Überschreitung eines Betriebsstrom-Schwellwerts durch den gemessenen Strom und/oder bei Überschreitung eines Anstiegs-Schwellwerts einer zeitlichen Ableitung des gemessenen Stroms ermöglicht.

Demgemäß ist es von Vorteil, wenn der Schutzschalter durch die zumindest eine optische Auslöseeinrichtung nur dann ausgelöst beziehungsweise ausgeschaltet wird, wenn ein gemessener Betriebsstrom durch den Schutzschalter oder durch die elektrische Anlage einen Betriebsstrom-Schwellwert überschreitet und/oder die zeitliche Ableitung des gemessenen Betriebsstroms einen Anstiegs-Schwellwert überschreitet.

Bei dieser Variante der elektrischen Anlage wird also ein zweites Kriterium für die Klassifizierung eines Ereignisses als Lichtbogen herangezogen. Konkret wird nicht nur das vom Lichtbogen ausgehende Licht ausgewertet (nämlich durch die optische Auslöseeinrichtung), sondern auch der durch einen Schutzschalter oder durch die elektrische Anlage fließende Strom. Ein Fotoblitz beispielsweise kann demzufolge kein Ausschalten des Schutzschalters bewirken, da ja damit kein Stromanstieg durch die elektrische Anlage einhergeht. Die Wahrscheinlichkeit einer Fehlauslösung wird damit deutlich verringert.

Günstig ist es, wenn die Wirkverbindung zwischen dem Schutzschalter und der Strom-Messeinrichtung und/oder der optischen Auslöseeinrichtung drahtlos oder drahtgebunden hergestellt ist. Generell ist es von Vorteil, wenn
- der Steuerausgang der Spannungs-Messeinrichtung / Strom-Messeinrichtung / optischen Auslöseeinrichtung als drahtloser Sender ausgebildet ist oder mit einem drahtlosen Sender verbunden ist,
- der Schalteingang des Schutzschalters als drahtloser Empfänger ausgebildet ist oder mit einem drahtlosen Empfänger verbunden ist und
- der drahtloser Sender und der drahtloser Empfänger zum Aufbau einer drahtlosen (Wirk)Verbindung ausgebildet sind.

Die drahtlose Variante bietet besonders viel Komfort für die in einer elektrischen Anlage anwesende Person, da sich diese wegen der drahtlosen Wirkverbindung frei in dem gesicherten Bereich bewegen kann. In Frage kommen dabei sowohl Funkverbindungen als auch optische Wirkverbindungen. Grundsätzlich ist auch möglich, dass der Steuerausgang der Spannungs-Messeinrichtung / Strom-Messeinrichtung / optischen Auslöseeinrichtung elektrisch beziehungsweise drahtgebunden mit dem Schalteingang des Schutzschalters (wirk)verbunden ist. Diese Variante schränkt die Bewegungsfreiheit der im gesicherten Bereich anwesenden Person etwas ein, ist dafür aber besonders (stör)sicher.

Günstig ist es schließlich, wenn der Schaltschrank für einen Betriebsstrom von zumindest 250 Ampere und/oder für eine Betriebsspannung von maximal 1000 VAC oder 1500 VDC ausgelegt ist. Diese Bereiche kennzeichnen Hochstrom-Anlagen beziehungsweise Niederspannungsanlagen. Für diese Art von elektrischen Anlagen eignet sich die vorgestellte Anordnung besonders gut.

An dieser Stelle wird angemerkt, dass sich die zur elektrischen Anlage offenbarten Varianten und die daraus resultierenden Vorteile gleichermaßen auf das Betriebsverfahren für die elektrische Anlage beziehen und umgekehrt.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Darstellung einer beispielhaften elektrischen Anlage mit einer Spannungs-Messeinrichtung, die mit einem Schutzschalter wirkverbunden ist;
- Fig. 2: eine Variante, bei der die Messelektroden mit einem Strom-Messwiderstand elektrisch miteinander verbunden sind;
- Fig. 3: eine Variante, bei der die Messelektroden elektrisch miteinander verbunden sind und der zwischen den Messelektroden fließende Strom mit einem Durchsteckwandler ermittelt wird;
- Fig. 4: ein Beispiel für ein Bekleidungsstück mit elektrischen Leitern und einem Durchsteckwandler zur Ermittlung des über die genannten Leiter fließenden Stroms;
- Fig. 5: wie Fig. 4, nur mit einem elektrisch leitfähigen Geflecht;
- Fig. 6: ein Beispiel für ein Bekleidungsstück mit elektrischen Leitern und einem Strom-Messwiderstand zur Ermittlung des über die genannten Leiter fließenden Stroms;
- Fig. 7: ein weiteres Beispiel für ein Bekleidungsstück mit elektrischen Leitern und einem Durchsteckwandler zur Ermittlung des über die genannten Leiter fließenden Stroms;
- Fig. 8: eine beispielhafte Schaltkaskade mit mehreren Lichtbogen-Kurzschluss-Schaltern und übergeordneten Leitungsschutzschaltern und
- Fig. 9: eine schematische Darstellung einer beispielhaften elektrischen Anlage mit optischen Auslöseeinrichtungen, die mit einem Schutzschalter wirkverbunden sind.

### DETAILIERTE BESCHREIBUNG DER ERFINDUNG

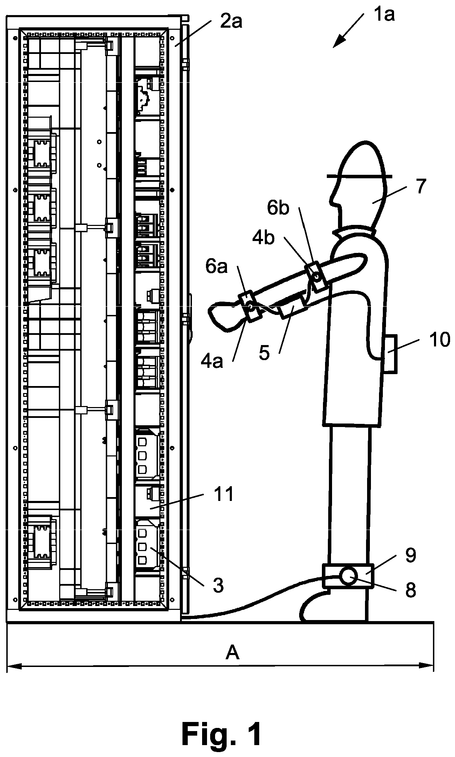

Die Fig. 1 zeigt eine elektrische Anlage 1a, umfassend einen Schaltschrank 2a und einen im Schaltschrank 2a angeordneten Schutzschalter 3. Der Schaltschrank 2a kann insbesondere für einen Betriebsstrom von zumindest 250 Ampere und/oder für eine Betriebsspannung von maximal 1000 VAC oder 1500 VDC ausgelegt sein. Weiterhin weist die elektrische Anlage 1a zwei Messelektroden 4a und 4b mit einer dazwischen angeordneten Spannungs-Messeinrichtung 5 zur Messung der zwischen den Messelektroden 4a, 4b liegenden Spannung auf. Die Spannungs-Messeinrichtung 5 ist mit dem Schutzschalter 3 wirkverbunden und dazu ausgebildet, den Schutzschalter 3 bei Erkennung einer über einem Schwellwert liegenden Überspannung auszulösen beziehungsweise auszuschalten (Fall a).

Der Schutzschalter 3 kann dazu einen Schalteingang zum Auslösen beziehungsweise Ausschalten des Schutzschalters 3 aufweisen. Die Spannungs-Messeinrichtung 5 kann einen Steuerausgang aufweisen, welcher mit dem Schalteingang des Schutzschalters 3 (wirk)verbunden ist. Bei Erkennung einer über einem Schwellwert liegenden Überspannung ändert die Messeinrichtung 5 den Zustand des Steuerausgangs und löst in Folge den Schutzschalter 3 aus.

Die beiden Messelektroden 4a, 4b sind für die Befestigung am menschlichen Körper ausgebildet, insbesondere auf der Haut des menschlichen Körpers. Konkret ist die erste Messelektrode 4a auf einer ersten Armbinde 6a angeordnet und die zweite Messelektrode 4b auf einer zweiten Armbinde 6b, welche von einer Person 7 getragen werden. Grundsätzlich könnten auch beide Messelektroden 4a, 4b voneinander beabstandet auf einer einzigen Armbinde angeordnet sein. Alternativ könnten die Messelektroden 4a, 4b auch auf einer Beinbinde oder mehreren Beinbinden angeordnet sein. Zwei gesonderte Binden 6a, 6b bieten den Vorteil besserer Beweglichkeit, eine einzige Binde hat dagegen den Vorteil, dass der Elektrodenabstand vorgegeben und damit bekannt ist.

Damit an der Person 7 keine gefährlichen Spannungspotentiale entstehen können, ist es von Vorteil, wenn diese - wie in der Fig. 1 dargestellt - mit Hilfe einer Erdungselektrode 8 mit einem Erdungspotential verbunden ist. Die Erdungselektrode 8, ist wiederum für die Befestigung am menschlichen Körper ausgebildet, insbesondere auf der Haut des menschlichen Körpers, und im konkret dargestellten Fall an einer Beinbinde 9 angeordnet. Alternativ könnte die Erdungselektrode 8 auch auf einer Armbinde angeordnet sein, im Speziellen auf derselben Armbinde 6a, 6b wie die Messelektrode(n) 4a, 4b.

Generell wäre auch vorstellbar, dass die Messelektroden 4a, 4b und/oder die Erdungselektrode 8 an der Innenseite eines Bekleidungsstücks angeordnet sind, insbesondere an einer Jacke, einer Hose, einem Schuh und/oder an einem Handschuh. Auf diese Weise werden einerseits der Arbeiter 7 aber auch die Messelektroden 4a, 4b und die Erdungselektrode 8 gut geschützt. Im Bereich der Messelektroden 4a, 4b und/oder der Erdungselektrode 8 können außen an dem betreffenden Kleidungsstück Spannbändchen angebracht sein, sodass die Messelektroden 4a, 4b und/oder der Erdungselektrode 8 fest auf die Haut des menschlichen Körpers aufgedrückt werden können. Solcherart entsteht wiederum eine Art Arm- oder Beinbinde.

In dem dargestellten Beispiel ist die Wirkverbindung zwischen dem Schutzschalter 3 und der Spannungs-Messeinrichtung 5 drahtlos hergestellt. Dazu ist der Steuerausgang der Spannungs-Messeinrichtung 5 mit einem drahtlosen Sender 10 verbunden und der Schalteingang des Schutzschalters 3 mit einem drahtlosen Empfänger 11. Der drahtlose Sender 10 und der drahtloser Empfänger 11 sind zum Aufbau einer drahtlosen (Wirk)Verbindung ausgebildet. In dem dargestellten Beispiel ist ein gesonderter Sender 10 und ein gesonderter Empfänger 11 vorgesehen. Denkbar wäre natürlich auch, dass der Sender 10 in die Spannungs-Messeinrichtung 5 und/oder der Empfänger 11 in den Schutzschalter 3 integriert ist.

Zwar bietet die drahtlose Variante, die beispielsweise optisch oder funkbasiert realisiert sein kann, viel Komfort und Bewegungsfreiheit für die Person 7, denkbar ist grundsätzlich aber auch, dass die Wirkverbindung zwischen der Spannungs-Messeinrichtung 5 und dem Schutzschalter 3 drahtgebunden hergestellt ist. Dazu kann der Steuerausgang der Spannungs-Messeinrichtung 5 mit Hilfe eines Kabels mit dem Schalteingang des Schutzschalters 3 verbunden sein. Diese Variante schränkt die Bewegungsfreiheit der im gesicherten Bereich anwesenden Person 7 zwar etwas ein, ist dafür aber besonders (stör)sicher.

Zur Durchführung des Betriebsverfahrens wird nun die zwischen den Messelektroden 4a, 4b abfallende Spannung ermittelt. Greift die Person 7 (unbeabsichtigt) auf Teile der elektrischen Anlage 1a, die eine gefährliche Spannung führen, so fließt über die Person 7, insbesondere über den greifenden Arm, ein elektrischer Strom, der durch den Widerstand des menschlichen Körpers (zirka 800 Ohm) einen Spannungsabfall zwischen den Messelektroden 4a, 4b verursacht. Überschreitet die gemessene Spannung beziehungsweise der dieser Spannung zugeordnete Fehlerstrom einen bestimmten Schwellwert, welcher eine Gefährdung für die Person 7 darstellt, so wird der Stromkreis, von welchem die Gefährdung ausgeht, durch den Schutzschalter 3 von einer Versorgungsspannung getrennt.

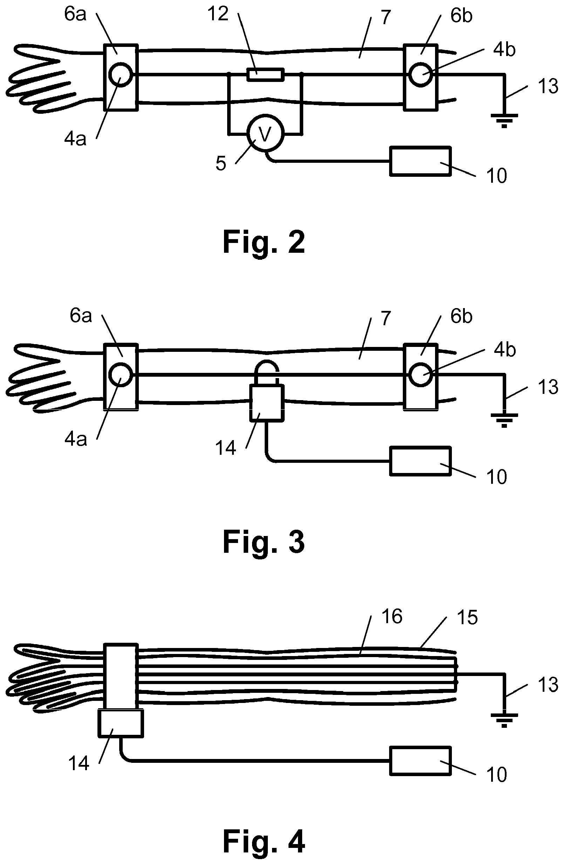

Fig. 2 zeigt nun eine Variante, bei der die Messelektroden 4a, 4b elektrisch miteinander verbunden sind, konkret mit einem Strom-Messwiderstand 12 (Fall b). Der Fehlerstrom wird dabei über die am Strom-Messwiderstand 12 abfallende elektrische Spannung ermittelt, welche mit der Spannungs-Messeinrichtung 5 gemessen wird. Die Spannungs-Messeinrichtung 5 ist wiederum mit dem drahtlosen Sender 10 verbunden und solcherart mit dem Schutzschalter 3 wirkverbunden.

Vorzugsweise ist der elektrische Widerstand des Strom-Messwiderstands 12 niedriger als der des menschlichen Körpers. Der Fehlerstrom fließt dann zumindest zwischen den beiden Messelektroden 4a, 4b hauptsächlich durch den Strom-Messwiderstand 12 und nur in geringem Maße durch den Arm der in der elektrischen Anlage 1a befindlichen Person 7. In dem in Fig. 2 dargestellten Beispiel ist die zweite Messelektrode 4b direkt mit einem Erdpotential 13 verbunden, sodass an der Person 7 keine gefährlichen Spannungspotentiale entstehen können. Denkbar ist natürlich auch, dass stattdessen eine Erdungselektrode 8 eingesetzt wird, so wie das in der Fig. 1 dargestellt ist.

Fig. 3 zeigt ein weiteres Beispiel für den Fall b), welches dem in Fig. 2 dargestellten Beispiel sehr ähnlich ist. Im Unterschied dazu wird aber kein Strom-Messwiderstand 12 eingesetzt, sondern die beiden Messelektroden 4a, 4b werden direkt mit einem elektrischen Leiter verbunden. Darüber hinaus entfällt auch die Spannungs-Messeinrichtung 5, und stattdessen wird ein Durchsteckwandler 14 eingesetzt, welcher ein elektromagnetisches Feldes misst, das durch den zwischen den Messelektroden 4a, 4b fließenden Strom verursacht wird. Überschreitet der gemessene Fehlerstrom einen bestimmten Schwellwert, welcher eine Gefährdung für die Person 7 darstellt, so wird der Stromkreis, von welchem die Gefährdung ausgeht, wiederum durch den Schutzschalter 3 von einer Versorgungsspannung getrennt. Die Verbindung zwischen den beiden Messelektroden 4a, 4b kann bei dieser Messmethode besonders niederohmig ausgeführt werden, und es fließt kaum Strom über den Arm der der elektrischen Anlage 1a befindlichen Person 7.

Fig. 4 zeigt nun ein Beispiel für ein Bekleidungsstück 15, das elektrische Leiter 16 aufweist und das die in der elektrischen Anlage 1a befindliche Person 7 trägt. In der Fig. 4 ist daher nicht der Arm der Person 7 direkt zu sehen, sondern eben das den Arm bedeckende Kleidungsstück 15. Im konkreten Fall ist das Bekleidungsstück 15 als langer Handschuh ausgebildet, es könnte aber auch eine Kombination eines kurzen Handschuhs mit dem Ärmel einer Jacke vorgesehen sein. Generell kann das Bekleidungsstück 15 beispielsweise als Handschuh, Jacke, Overall, Hose, Schuh oder Schutzanzug ausgebildet sein.

Die elektrischen Leiter 16 sind in diesem Fall durch längs des Arms verlaufende, elektrisch leitende Drähte gebildet. Beispielsweise können die Drähte 16 metallisch sein, als Kohlenstoff-Drähte ausgebildet sein oder beispielsweise auch aus einem leitfähigen Kunststoff bestehen. Die Drähte 16 sind in das Bekleidungsstück 15 eingearbeitet und berühren die Haut der in der elektrischen Anlage 1a befindlichen Person 7 vorzugsweise nicht. Beispielsweise liegt zwischen der Haut und den Drähten 16 eine Schicht aus Baumwollgewebe oder eines anderen elektrisch isolierenden Stoffs. Wenngleich eine Isolation zwischen den Drähten 16 und der Person 7 vorteilhaft ist, so können die Drähte 16 nichts desto trotz auch auf der Haut der in der elektrischen Anlage 1a befindlichen Person 7 aufliegen.

Die Messung des Fehlerstroms erfolgt über einen Durchsteckwandler 14, der beispielhaft im Bereich des Handgelenks angeordnet ist und wiederum das elektromagnetische Feld misst, das durch einen durch die Drähte 16 des Bekleidungsstücks 15 fließenden Strom hervorgerufen ist. Weil der elektrische Widerstand der Drähte 16 vorzugsweise deutlich geringer ist als der Widerstand des menschlichen Körpers, fließt der Fehlerstrom im Wesentlichen über die Drähte 16 und in nur sehr geringem Maße über den Arm der Person 7, welche solcherart besonders gut vor den Auswirkungen eines Fehlerstroms geschützt wird. Die Drähte 16 sind in diesem Beispiel wiederum mit einem Erdpotential 13 verbunden, sodass an der Person 7 keine gefährlichen Spannungspotentiale entstehen können.

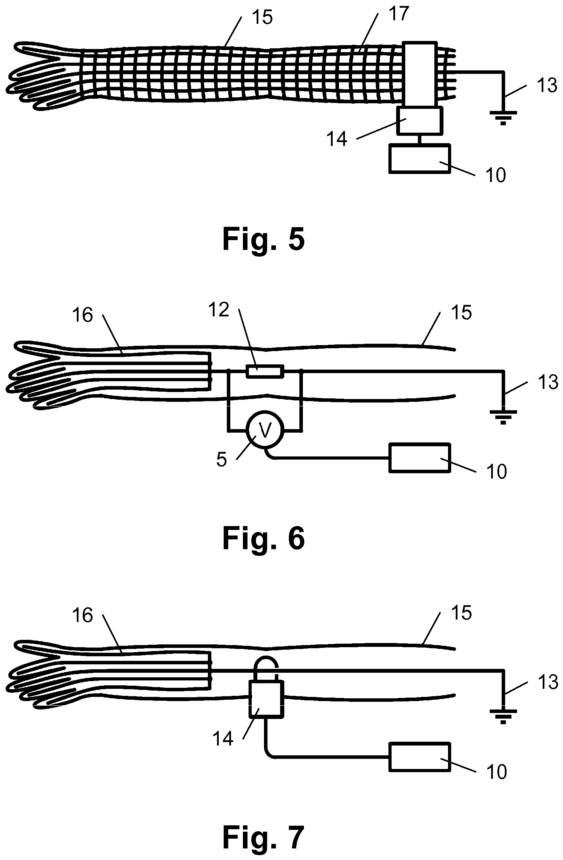

Die Fig. 5 zeigt ein weiteres Beispiel, welches dem in Fig. 4 dargestellten Beispiel sehr ähnlich ist. Im Unterschied dazu ist in das Bekleidungsstück 15 aber ein elektrisch leitendes Geflecht 17 eingearbeitet, welches wiederum aus Metall, Kohlenstoff oder einem leitfähigen Kunststoff bestehen kann. Der Durchsteckwandler 14 ist beispielhaft im Bereich des Oberarms angeordnet, wodurch auch Fehlerströme detektierbar sind, wenn die Person 7 etwa mit dem Ellbogen an leitende Teile der elektrischen Anlage 1a anstößt. Selbstverständlich kann der Durchsteckwandler 14 aber auch bei dem in Fig. 5 dargestellten Beispiel im Bereich des Handgelenks angeordnet sein, und der Durchsteckwandler 14 kann bei dem in Fig. 4 dargestellten Beispiel im Bereich der Schulter angeordnet sein. Vorteilhaft wird der Fehlerstrom durch das Geflecht 17 besser auf die längs verlaufenden Drähte verteilt. Zu demselben Zweck kann anstelle des Geflechts 17, zusätzlich dazu, oder auch zusätzlich zu den Drähten 16 des in Fig. 4 dargestellten Beispiels eine elektrisch leitfähige Folie in das Bekleidungsstück 15 eingearbeitet sein, die wiederum aus Metall, Kohlenstoff oder einem leitfähigen Kunststoff bestehen kann.

Fig. 6 zeigt ein weiteres Beispiel, bei dem die leitfähigen Drähte 16 an einen Strommesswiderstand 12 angeschlossen sind, der wiederum mit einem Erdungspotential 13 verbunden ist. Der Fehlerstrom wird wieder über die am Strom-Messwiderstand 12 abfallende elektrische Spannung ermittelt, welche mit der Spannungs-Messeinrichtung 5 gemessen wird. Vorzugsweise ist auch hier der elektrische Widerstand des Strom-Messwiderstands 12 niedriger als der des menschlichen Körpers, sodass der Fehlerstrom hauptsächlich durch den Strom-Messwiderstand 12 fließt und nur in geringem Maße durch den Arm der der elektrischen Anlage 1a befindlichen Person 7.

Fig. 7 zeigt schließlich noch ein Beispiel, bei dem die leitfähigen Drähte 16 miteinander verbunden sind und direkt an das Erdungspotential 13 angeschlossen sind. Über den Durchsteckwandler 14 wird wiederum ein elektromagnetisches Feld gemessen, das durch den zum Erdungspotential 13 fließenden Strom verursacht wird. Die Verbindung mit dem Erdungspotential 13 kann bei dieser Messmethode besonders niederohmig ausgeführt werden, und es fließt kaum Strom über den Arm der der elektrischen Anlage 1a befindlichen Person 7.

Die vorgeschlagenen Maßnahmen können in einer elektrischen Anlage 1a auch in Kombination angewandt werden. Generell sollten die in einer elektrischen Anlage 1a befindlichen Personen 7 erfindungsgemäß Schutzkleidung tragen, die mit elektrischen Leitern 16, 17 ausgestattet ist. Entgegen der Empfehlungen oder auch Vorschriften der Betreiber der elektrischen Anlagen 1a wird die Schutzbekleidung 15 jedoch bisweilen zumindest zeitweise nicht getragen. Beispielsweise werden die Schutzhandschuhe 15 ausgezogen, wenn Arbeiten durchgeführt werden müssen, die mit den Schutzhandschuhen 15 nur schwer erledigt werden können, etwa Einstellarbeiten oder das Einschrauben von Schrauben. Berührt der Arbeiter 7 nun elektrische leitende Teile der elektrischen Anlage 1a, so kann der Fehlerstrom nicht über die (nicht getragenen) Handschuhe 15 abfließen, sondern fließt über den Körper des Arbeiters 7. Vorteilhaft greifen nun die in den Fällen a) oder b) vorgeschlagenen Maßnahmen (siehe die Figuren 1 bis 3), wodurch es ebenfalls zu einer Abschaltung des Stromkreises kommt, von welchem die Gefährdung ausgeht. Die elektrische Anlage 1a ist somit besonders sicher.

In der Fig. 1 ist lediglich eine Person 7 mit einem Elektrodenpaar 4a, 4b und einer Erdungselektrode 8 dargestellt. Selbstverständlich kann die elektrische Anlage 1a auch mehrere Elektrodenpaare 4a, 4b und/oder Erdungselektroden 8 aufweisen, sodass zum Beispiel eine Person 7 mit mehreren Elektrodenpaaren 4a, 4b und/oder Erdungselektroden 8 ausgestattet werden kann, oder sodass mehrere Personen 7 mit Elektrodenpaaren 4a, 4b und/oder Erdungselektroden 8 ausgestattet werden können. Gleichermaßen kann die elektrische Anlage 1a eine oder mehrere der in den Figuren 2 bis 7 dargestellten Schutzausrüstungen für eine oder mehrere Personen 7 umfassen, insbesondere auch Schutzausrüstungen unterschiedlicher Bauart.

Generell können die Spannungs-Messeinrichtung 5 / Strom-Messeinrichtung 14 Teil des Bekleidungsstücks 15 sein. Beispielsweise kann ein Durchsteckwandler 14 in einen Handschuh eingearbeitet sein.

In den in den Figuren 1 bis 7 dargestellten Beispielen erfolgt die Messung des Fehlerstroms am Arm der Person 7, insbesondere am Handgelenk der Person 7. In gleicher Weise kann die Messung auch an einem anderen Körperteil erfolgen, beispielsweise am Bein oder am Fußgelenk der Person 7. Vorteilhaft wird der Schutzschalter 3 in diesem Fall nicht nur dann ausgeschaltet/ausgelöst, wenn die Person 7 leitende Teile der elektrischen Anlage 1a mit den Fingern oder der Hand berührt, sondern beispielsweise auch dann, wenn sie diese mit der Hüfte berührt. Vorteilhaft ist es in diesem Zusammenhang, wenn der Fehlerstrom über die Beine oder Füße der Person 7 abgeleitet wird, was insbesondere durch Verbinden der Beine oder Füße mit dem Erdungspotential 13 sichergestellt werden kann. Aus den genannten Gründen kann es auch von Vorteil sein, wenn die gesamte Schutzkleidung 15 der Person 7 mit elektrischen Leitern 16, 17 ausgestattet ist.

Der Schutzschalter 3 kann als Leitungsschutzschalter, als Lichtbogen-Kurzschluss-Schalter oder als kombinierter Leitungs- und Lichtbogen-Kurzschluss-Schalter ausgebildet sein. Diese Schalter sind in einer elektrischen Anlage 1a oft ohnehin bereits für andere Zwecke vorhanden und werden von dem vorgeschlagenen System mitverwendet, wodurch sich ein Doppelnutzen ergibt.

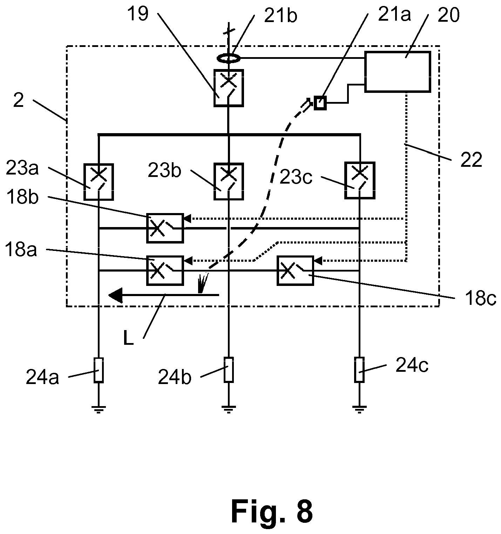

Fig. 8 zeigt das Wirkprinzip einer Schalt-Kaskade, welche mehrere Lichtbogen-Kurzschluss-Schalter 18a..18c und einen übergeordneten Leitungsschutzschalter 19 aufweist. Fig. 8 zeigt weiterhin den rein symbolisch dargestellten beispielhaften Schaltschrank 2 mit einer Vorrichtung 20 zur Erkennung eines Lichtbogens, welche mit einem lichtempfindlichen Element 21a sowie einer Strom-Meßschleife 21b respektive einem Durchsteckwandler 21b verbunden ist. Zudem weist die genannte Vorrichtung 20 einen Schaltausgang 22 auf.

Zusätzlich zu dem übergeordneten Leitungsschutzschalter 19 sind optionale, je einer Phase eines Dreiphasensystems zugeordnete Leitungsschutzschalter 23a..23c vorgesehen. An den Schaltschrank 2 sind schließlich auch drei Verbraucher 24a..24c angeschlossen.

Die Funktionsweise der Schalt-Kaskade wird nun am Beispiel eines zwischen zwei Phasen brennenden Störlichtbogens L erläutert:
Mit Hilfe des lichtempfindlichen Elements 21a wird ein Überwachungsbereich auf das Auftreten eines Lichtbogens L überwacht. Wird ein Lichtbogen L detektiert, dann wird ein Schaltsignal über den Ausgang 22 ausgegeben, das an die Eingänge der Lichtbogen-Kurzschluss-Schalter 18a..18c geführt ist. In Folge des Schaltsignals werden die Lichtbogen-Kurzschluss-Schalter 18a..18c geschlossen und löschen damit den zwischen den Phasen brennenden Lichtbogen L. Der durch den Kurschluss hervorgerufene Überstrom löst in Folge den übergeordneten Leitungsschutzschalter 19 beziehungsweise die Leitungsschutzschalter 23a..23c aus, wodurch der betroffene Stromkreis letztlich vom Stromnetz getrennt wird.

Denkbar ist natürlich auch, dass der Leitungsschutzschalter 19 und/oder die Leitungsschutzschalter 23a..23c nicht über den Überstrom auslösen, sondern direkt über das Signal am Ausgang 22, der dann auch an die Eingänge des Leitungsschutzschalters 19 und/oder der Leitungsschutzschalter 23a..23c geführt ist.

Im vorliegenden Fall wird nicht nur das Signal des lichtempfindlichen Elements 21a für die Entscheidung darüber herangezogen, ob ein Lichtbogen L vorliegt oder nicht, sondern auch der von der Strom-Meßschleife 21b gemessene Strom. Gemäß diesem Verfahren liegt dann ein Lichtbogen L vor, wenn über das lichtempfindliche Element 21a grelles Licht gemessen wird UND wenn der von der Strom-Meßschleife 21b gemessene Betriebsstrom einen Betriebsstrom-Schwellwert überschreitet. Die Strom-Meßschleife 21b wirkt also als Betriebsstrom-Messeinrichtung 21b. Selbstverständlich können aber auch zusätzliche beziehungsweise andere Kriterien für die Bestimmung darüber herangezogen werden, ob ein Lichtbogen L vorliegt oder nicht.

Die Spannungs-Messeinrichtung 5 / Strom-Messeinrichtung 14 der Fig. 1 bis 7 kann nun direkt mit dem Leitungsschutzschalter 19 / den Leitungsschutzschaltern 23a..23c wirkverbunden sein und diese(n) ansteuern. Die Spannungs-Messeinrichtung 5 / Strom-Messeinrichtung 14 kann aber auch mit den Lichtbogen-Kurzschluss-Schaltern 18a..18c wirkverbunden sein und diese ansteuern, sofern Lichtbogen-Kurzschluss-Schalter 18a..18c im Schaltschrank 2 verbaut sind. In diesem Fall können die Leitungsschutzschalter 19, 23a..23c indirekt durch die oben beschriebene Kaskade-Wirkung ausgelöst werden, oder die Leitungsschutzschalter 19, 23a..23c werden ebenfalls direkt von der Spannungs-Messeinrichtung 5 / Strom-Messeinrichtung 14 angesteuert. Die Spannungs-Messeinrichtung 5 / Strom-Messeinrichtung 14 kann somit mit einem Störlichbogen-Schutzsystem wirkverbunden sein.

In dem gezeigten Beispiel sind sowohl ein übergeordneter Leitungsschutzschalter 19 als auch je einer Phase eines Dreiphasensystems zugeordnete Leitungsschutzschalter 23a..23c vorgesehen. Bei gleicher oder vergleichbarer Funktion der Anordnung kann auch nur der übergeordnete Leitungsschutzschalter 19 vorgesehen sein oder nur die je einer Phase eines Dreiphasensystems zugeordneten Leitungsschutzschalter 23a..23c.

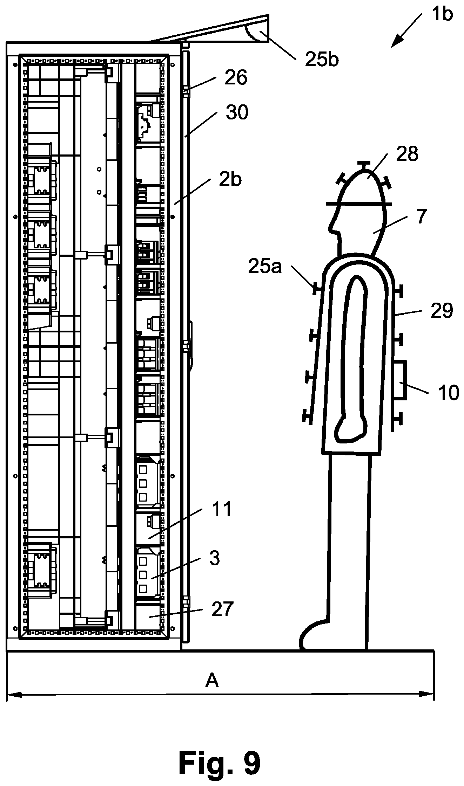

Fig. 9 zeigt nun ein weiteres Beispiel einer elektrischen Anlage 1b, umfassend einen Schaltschrank 2b sowie den im Schaltschrank 2b angeordneten Schutzschalter 3. Der Schaltschrank 2b kann wiederum für einen Betriebsstrom von zumindest 250 Ampere und/oder für eine Betriebsspannung von maximal 1000 VAC oder 1500 VDC ausgelegt sein. Weiterhin weist die elektrische Anlage 1b mehrere mit dem Schutzschalter 3 wirkverbundene optische Auslöseeinrichtungen 25a, 25b auf, welche dazu ausgebildet sind, den Schutzschalter 3 bei Erkennung eines Lichtbogens L auszulösen beziehungsweise auszuschalten.

Zusätzlich weist die elektrische Anlage 1b eine Detektionseinrichtung 26 zur Erkennung eines Zutritts oder eines Zutrittswunsches zu einem gesicherten Bereich der elektrischen Anlage 1b auf, sowie die elektronische Schaltung 27, welche mit der Detektionseinrichtung 26 verbunden ist und eine Auslösung beziehungsweise ein Ausschalten des Schutzschalters 3 durch zumindest eine der optischen Auslöseeinrichtungen 25a, 25b bei Erkennung eines Zutritts oder eines Zutrittswunsches ermöglicht und andernfalls verhindert.

Der Schutzschalter 3 kann dazu einen Schalteingang zum Auslösen beziehungsweise Ausschalten des Schutzschalters 3 aufweisen. Die optische Auslöseeinrichtung 25a, 25b kann einen Steuerausgang aufweisen, welcher mit dem Schalteingang des Schutzschalters 3 (wirk)verbunden ist. Bei Erkennung eines Lichtbogens L ändert die optische Auslöseeinrichtung 25a, 25b den Zustand des Steuerausgangs und löst in Folge den Schutzschalter 3 aus.

In dem vorliegenden Beispiel sind mehrere erste optische Auslöseeinrichtungen 25a für die Befestigung am menschlichen Körper ausgebildet, und eine zweite optische Auslöseeinrichtung 25b ist außen am Schaltschrank 2b angeordnet. Die ersten optischen Auslöseeinrichtungen 25a können, wie in der Fig. 9 dargestellt, auf einem Helm 28, einer Armbinde und/oder auf einem Bekleidungsstück 29 angeordnet sein und von der Person 7 getragen werden. Im vorliegenden Beispiel ist als Bekleidungsstück eine spezielle Schutzweste 29 vorgesehen, denkbar ist aber auch, dass die ersten optische Auslöseeinrichtungen 25a auf einer Jacke oder einer Hose angeordnet sind.

Die Detektionseinrichtung 26 ist in dem in Fig. 9 dargestellten Beispiel zur Erkennung eines Schließzustands einer Schaltschranktür 30 ausgebildet, konkret als Schaltkontakt. Die Schaltschranktür 30 ist in dem gezeigten Beispiel vollständig geöffnet und daher nur von ihrer Schmalseite aus zu sehen. Die mit der Detektionseinrichtung 26 verbundene elektronische Schaltung 27 ist dazu ausgebildet, eine Auslösung beziehungsweise ein Ausschalten des Schutzschalters 3 durch die optischen Auslöseeinrichtungen 25a, 25b im OFFEN-Zustand der Schaltschranktür 30 zu ermöglichen und im GESCHLOSSEN-Zustand der Schaltschranktür 30 zu verhindern. Ein Zutritt beziehungsweise Zugriff zum Schaltschrank 2b wird im vorliegenden Beispiel also dadurch erkannt, dass die Schaltschranktür 30 geöffnet wird.

Der Schutzschalter 3 wird also nur dann durch die optischen Auslöseeinrichtungen 25a, 25b ausgeschaltet beziehungsweise ausgelöst, wenn die Schaltschranktür 30 geöffnet ist und ein Zutritt beziehungsweise Zugriff zum Schaltschrank 2b erkannt wird. Dementsprechend werden ein positives Lichtbogensignal der optischen Auslöseeinrichtungen 25a, 25b und ein Zutritts-Signals der Detektionseinrichtung 5 logisch UND-verknüpft. Die ausgangsseitig mit dem Schutzschalter 3 wirkverbundene elektronische Schaltung 27 kann demzufolge als logische UND-Verknüpfung ausgebildet sein oder zumindest als solche wirken. Die UND-Verknüpfung ist somit logisch zwischen dem Schutzschalter 3 und den optischen Auslöseeinrichtungen 25a, 25b eingefügt.

Durch die vorgeschlagenen Maßnahmen wird sichergestellt, dass die optischen Auslöseeinrichtungen 25a, 25b den Schutzschalter 3 nur dann auslösen, wenn von dem gesicherten Bereich auch tatsächlich eine Gefahr ausgeht. In diesem Beispiel liegt dann ein Gefahrenfall vor, wenn die Schaltschranktür 30 geöffnet ist, und somit passive Maßnahmen (Abdeckungen, Gehäuse, Verbauten beziehungsweise das Gehäuse des Schaltschranks 2b als solches) zum Schutz vor den Auswirkungen eines Störlichtbogens L nicht oder nur eingeschränkt wirken. Geht dagegen keine Gefahr von dem gesicherten Bereich aus (weil die Schaltschranktür 30 geschlossen ist), so können die optischen Auslöseeinrichtungen 25a, 25b den Schutzschalter 3 nicht auslösen. Damit wird vermieden, dass sicherheitskritische Stromkreise wegen eines vermeintlichen Notfalls und ohne tatsächliche Gefahr für die Person 7 abgeschaltet werden.

In dem in Fig. 9 dargestellten Beispiel sind mehrere, auf der Person 7 rundum verteilte erste optische Auslöseeinrichtung 25a sowie eine zweite optische Auslöseeinrichtung 25b außen am Schaltschrank 2b angeordnet, welche auf das Innere des Schaltschranks 2b ausgerichtet ist. Denkbar wäre auch, dass die zweite Auslöseeinrichtung 25b innen im Schaltschrank 2b angeordnet ist oder auch, dass mehrere zweite Auslöseeinrichtungen 25b vorgesehen sind. Gleichermaßen ist vorstellbar, dass nur eine erste optische Auslöseeinrichtung 25a vorgesehen ist und beispielsweise auf dem Helm 28 angebracht ist, welche insbesondere in Blickrichtung der Person 7 ausgerichtet sein kann. Durch das Vorsehen von ersten und zweiten optischen Auslöseeinrichtungen 25a und 25b ist die Person 7 jedenfalls sehr gut vor einem auftretenden Lichtbogen L geschützt.

Dennoch ist denkbar, dass nur erste optische Auslöseeinrichtungen 25a an der Person 7 angeordnet sind (und eine zweite optische Auslöseeinrichtung 25b am oder im Schaltschrank 2b fehlt), oder dass nur zumindest eine zweite optische Auslöseeinrichtung 25b am oder im Schaltschrank 2b angeordnet ist (und eine erste optische Auslöseeinrichtung 25a an der Person 7 fehlt). Das System ist dann einfacher aufgebaut und funktioniert in der bereits oben beschriebenen Weise.

In dem in Fig. 9 dargestellten Beispiel erkennt die Detektionseinrichtung 26 den Schließzustand der Schaltschranktür 30. Denkbar ist aber auch, dass die Detektionseinrichtung 26 alternativ oder zusätzlich den Schließzustand einer Zutrittstür zur elektrischen Anlage 1b erkennt (nicht dargestellt).

Denkbar ist zudem, dass die Detektionseinrichtung 26 als manuell betätigbarer Zutrittsschalter zum Schaltschrank 2b und/oder zur elektrischen Anlage 1b ausgebildet ist und die mit der Detektionseinrichtung 26 verbundene elektronische Schaltung 27 dazu ausgebildet ist, eine Auslösung beziehungsweise ein Ausschalten des Schutzschalters 3 durch die optischen Auslöseeinrichtungen 25a, 25b bei betätigtem Zutrittsschalter zu ermöglichen und andernfalls zu verhindern. Ein solcher Zutrittsschalter kann beispielsweise als Schlüsselschalter ausgebildet und am Eingang zur elektrischen Anlage 1b angeordnet sein. Der Zutrittsschalter kann auch mit einem Schloss gekoppelt sein, das eine Tür zur elektrischen Anlage 1b respektive eine Schaltschranktür 30 verschließt. Wird der Zutrittsschalter betätigt, so öffnet sich das Schloss und auch die optischen Auslöseeinrichtungen 25a, 25b werden freigegeben, wodurch ein Ausschalten des Schutzschalters 3 durch die optischen Auslöseeinrichtungen 25a, 25b ermöglicht wird.

Als weitere alternative oder zusätzliche Möglichkeit kann vorgesehen sein, dass die Detektionseinrichtung 26 zur Erkennung der Anwesenheit der optischen Auslöseeinrichtungen 25a, 25b in einem Gefahrenbereich A der elektrischen Anlage 1b ausgebildet ist und die mit der Detektionseinrichtung 26 verbundene elektronische Schaltung 27 eine Auslösung beziehungsweise ein Ausschalten des Schutzschalters 3 durch die optischen Auslöseeinrichtungen 25a, 25b ermöglicht, wenn die optischen Auslöseeinrichtungen 25a, 25b im Gefahrenbereich A anwesend sind und andernfalls verhindert.

Zu diesem Zweck kann die Detektionseinrichtung 26 als drahtloser Detektions-Empfänger ausgebildet oder mit einem drahtlosen Detektions-Empfänger verbunden sein. Insbesondere kann die Detektionseinrichtung 26 mit dem drahtlosen Empfänger 11 verbunden oder durch diesen realisiert sein.

Die optischen Auslöseeinrichtungen 25a, 25b werden dann als anwesend in einem Gefahrenbereich A erkannt, wenn ein von den optischen Auslöseeinrichtungen 25a, 25b verursachtes Sendesignal eine über einem Feldstärke-Schwellwert liegende Empfangsfeldstärke im Detektions-Empfänger hervorruft. Der Gefahrenbereich A, in dem sich die optischen Auslöseeinrichtungen 25a, 25b befinden müssen, um den Schutzschalter 3 auslösen zu können muss nicht notwendigerweise mit dem Empfangsbereich des mit dem Schalteingang des Schutzschalters 3 gekoppelten drahtlosen Empfängers 11 übereinstimmen. Für eine korrekte Funktion ist es zwar notwendig, dass der genannte Empfangsbereich des Empfängers 11 den Gefahrenbereich A abdeckt, er kann aber auch darüber hinausgehen.

Die zur Detektionseinrichtung 26 zur Erkennung der Anwesenheit der optischen Auslöseeinrichtungen 25a, 25b in einem Gefahrenbereich A der elektrischen Anlage 1b offenbarte technische Lehre ist sinngemäß auch auf die Spannungs-Messeinrichtung 5 / Strom-Messeinrichtung 14 respektive den Sender 10 anwendbar. Das heißt, die elektrische Anlage 1a kann ebenfalls dazu ausgebildet sein, die Anwesenheit der Spannungs-Messeinrichtung 5 / Strom-Messeinrichtung 14 respektive den Sender 10 in einem Gefahrenbereich A der elektrischen Anlage 1a zu erkennen. Dementsprechend wird eine Auslösung beziehungsweise ein Ausschalten des Schutzschalters 3 durch die Spannungs-Messeinrichtung 5 / Strom-Messeinrichtung 14 ermöglicht, wenn die Spannungs- Messeinrichtung 5 / Strom-Messeinrichtung 14 respektive der Sender 10 im Gefahrenbereich A anwesend sind und andernfalls verhindert.

Für die Art des Schutzschalters 3 gilt das bereits zu den Figuren 1 bis 8 Gesagte.

Das heißt, der Schutzschalter 3 der Fig. 9 kann wiederum als Leitungsschutzschalter 19, 23a..23b, als Lichtbogen-Kurzschluss-Schalter 18a..18b oder als kombinierter Leitungs- und Lichtbogen-Kurzschluss-Schalter ausgebildet sein (siehe dazu Fig. 8).

Die Erkennung eines Lichtbogens kann rein optisch erfolgen, oder es ist eine Betriebsstrom-Messeinrichtung 21b zur Messung eines durch den Schutzschalter 3, 19, 23a..23b oder durch die elektrische Anlage 1b fließenden Stroms vorgesehen, sowie eine elektronische Schaltung 20, welche mit der Betriebsstrom-Messeinrichtung 21b verbunden ist und eine Auslösung beziehungsweise ein Ausschalten des Schutzschalters 3, 19, 23a..23b durch die optische Auslöseeinrichtung 25a, 25b nur bei Überschreitung eines Betriebsstrom-Schwellwerts durch den gemessenen Strom und/oder bei Überschreitung eines Anstiegs-Schwellwerts einer zeitlichen Ableitung des gemessenen Stroms ermöglicht.

Die Wirkverbindung zwischen dem Schutzschalter 3 und den optischen Auslöseeinrichtungen 25a, 25b kann wiederum drahtlos oder drahtgebunden hergestellt sein, so wie dies weiter oben bereits für die Wirkverbindung zwischen dem Schutzschalter 3 und der Spannungs-Messeinrichtung 5 / Strom-Messeinrichtung 14 beschrieben wurde.

Durch die Kombination des in den Figuren 1 bis 7 dargestellten Systems zur Vermeidung eines gesundheitsschädlichen Fehlerstroms mit dem in Fig. 9 dargestellten System zur Vermeidung eines Lichtbogens L ist die Person 7 besonders gut geschützt. An dieser Stelle wird angemerkt, dass aus Gründen der besseren Übersicht nicht alle in den Figuren 1 bis 7 von der Person 7 getragenen und dort explizit dargestellten Elemente (Messelektroden 4a, 4b, Spannungs-Messeinrichtung 5, Armbinden 6a, 6b, Erdungselektrode 8, Beinbinde 9, Sender 10, Strommesswiderstand 12, Strom-Messeinrichtung 14, etc.) auch in Fig. 9 dargestellt sind. In der Realität sind diese Elemente bei einer Kombination der beiden genannten System jedoch vorhanden. Diese können gleichzeitig getragen werden, oder es wird ein bestimmtes System bedarfsweise an der Person 7 angeordnet.

Die Spannungs-Messeinrichtung 5 / Strom-Messeinrichtung 14 und die optischen Auslöseeinrichtungen 25a, 25b können insbesondere mit demselben Schutzschalter 3 wirkverbunden sein. In diesem Fall wird ein und derselbe Schutzschalter 3 für die Gefahrenabwendung mehrerer unterschiedlicher Störfälle eingesetzt, nämlich für die Vermeidung eines gesundheitsschädlichen Fehlerstroms durch die Person 7, für die Vermeidung eines Lichtbogens L, welcher gesundheitsschädlich für die Person 7 sein kann, sowie natürlich auch für die Vermeidung von Überströmen (im Falle eines Leitungsschutzschalters) und auch für die Vermeidung von Lichtbögen L, wenn keine Person 7 anwesend ist (im Falle eines Lichtbogen-Kurzschluss-Schalters).

Grundsätzlich könnten die optischen Auslöseeinrichtungen 25a, 25b aber auch mit einem anderen Schutzschalter 3 wirkverbunden sein als die Spannungs-Messeinrichtung 5 / Strom-Messeinrichtung 14. Denkbar ist auch, dass die Spannungs-Messeinrichtung 5 / Strom-Messeinrichtung 14 mit einer ersten Gruppe von Schutzschaltern 3 wirkverbunden ist und die optischen Auslöseeinrichtungen 25a, 25b mit einer zweiten Gruppe von Schutzschaltern 3. Die beiden Gruppen können im Speziellen auch eine Schnittmenge aufweisen.

Abschließend wird angemerkt, dass die elektrische Anlage 1a, 1b oder deren Bauteile nicht notwendigerweise maßstäblich dargestellt sind und diese daher auch andere Proportionen aufweisen können. Weiterhin kann eine elektrische Anlage 1a, 1b auch mehr oder weniger Bauteile als dargestellt umfassen. Lageangaben ( z.B. "oben", "unten", "links", "rechts", etc.) sind auf die jeweils beschriebene Figur bezogen und sind bei einer Lageänderung sinngemäß an die neue Lage anzupassen. Schließlich wird angemerkt, dass sich die obigen Ausgestaltungen und Weiterbildungen der Erfindung auf beliebige Art und Weise kombinieren lassen.

## Patentansprüche

1. Elektrische Anlage (1a, 1b), umfassend
- einen Schaltschrank (2, 2a, 2b) und
- einen im Schaltschrank (2, 2a, 2b) angeordneten Schutzschalter (3),
**dadurch gekennzeichnet, dass**
- die elektrische Anlage (1a, 1b) ein Bekleidungsstück (15) mit elektrischen Leitern (16, 17) und eine Strom-Messeinrichtung (14) zur Messung des über die genannten elektrischen Leiter (16) fließenden Stroms umfasst, wobei beim Tragen des Bekleidungsstücks (15) von einer in der elektrischen Anlage (1a, 1b) befindlichen Person (7) ein Fehlerstrom im Wesentlichen über die elektrischen Leiter (16, 17) des Bekleidungsstücks (15) und nur zu einem geringen Teil über den Körper der genannten Person (7) fließt,
- die Strom-Messeinrichtung (14) mit dem Schutzschalter (3) drahtlos oder drahtgebunden wirkverbunden ist und
- die Strom-Messeinrichtung (14) dazu ausgebildet ist, den Schutzschalter (3) bei Erkennung eines über einem Schwellwert liegenden Messwerts auszulösen beziehungsweise auszuschalten.

2. Elektrische Anlage (1a, 1b) nach Anspruch 1, **dadurch gekennzeichnet, dass**
- der Schutzschalter (3) einen Schalteingang zum Auslösen beziehungsweise Ausschalten des Schutzschalters (3) aufweist,
- die Strom-Messeinrichtung (14) einen Steuerausgang aufweist, welcher mit dem Schalteingang des Schutzschalters (3) verbunden ist und
- die Strom-Messeinrichtung (14) dazu ausgebildet ist, den Zustand des Steuerausgangs bei Erkennung eines über einem Schwellwert liegenden Messwerts zu ändern und in Folge den Schutzschalter (3) auszulösen beziehungsweise auszuschalten.

3. Elektrische Anlage (1a, 1b) nach Anspruch 1 oder 2, **dadurch gekennzeichnet, dass** der Schutzschalter (3) als Leitungsschutzschalter (19, 23a..23c), als Lichtbogen-Kurzschluss-Schalter (18a..18c) oder als kombinierter Leitungs- und Lichtbogen-Kurzschluss-Schalter ausgebildet ist.

4. Elektrische Anlage (1a, 1b) nach einem der Ansprüche 1 bis 3, **dadurch gekennzeichnet, dass** diese zusätzlich zwei für die Befestigung am menschlichen Körper ausgebildete Messelektroden (4a, 4b) umfasst sowie
a) eine dazwischen angeordneten Spannungs-Messeinrichtung (5) zur Messung der zwischen den Messelektroden (4a, 4b) liegenden Spannung und/oder
b) eine dazwischen angeordneten Strom-Messeinrichtung (14) zur Messung des zwischen den Messelektroden (4a, 4b) fließenden Stroms.

5. Elektrische Anlage (1a, 1b) nach Anspruch 4, **dadurch gekennzeichnet, dass** je eine Elektrode (4a, 4b) auf je einer Armbinde/Beinbinde (6a, 6b) angeordnet ist oder dass beide Messelektroden (4a, 4b) voneinander beabstandet auf einer einzigen Armbinde/Beinbinde angeordnet sind.

6. Elektrische Anlage (1a, 1b) nach einem der Ansprüche 1 bis 5, **dadurch gekennzeichnet, dass**
- die elektrische Anlage (1a, 1b) einen mit den elektrischen Leitern (16 17) des Bekleidungsstücks (15) verbundenen Strom-Messwiderstand (12) sowie eine Spannungs-Messeinrichtung (5) zur Messung der am Strom-Messwiderstand (12) abfallenden elektrischen Spannung aufweist und/oder
- die Strom-Messeinrichtung einen Durchsteckwandler (14) zur Messung eines elektromagnetischen Feldes aufweist, welches durch einen durch die elektrischen Leiter (16, 17) des Bekleidungsstücks (15) fließenden Strom hervorgerufen ist.

7. Elektrische Anlage (1a, 1b) nach einem der Ansprüche 4 bis 6, **dadurch gekennzeichnet, dass**
- die elektrische Anlage (1a, 1b) im Fall b) einen mit den Messelektroden (4a, 4b) elektrisch verbundenen Strom-Messwiderstand (12) sowie eine Spannungs-Messeinrichtung (5) zur Messung der am Strom-Messwiderstand (12) abfallenden elektrischen Spannung aufweist und/oder
- die Strom-Messeinrichtung einen Durchsteckwandler (14) zur Messung eines elektromagnetischen Feldes aufweist, welches im Fall b) durch einen zwischen den Messelektroden (4a, 4b) fließenden Strom hervorgerufen ist.

8. Elektrische Anlage (1a, 1b) nach einem der Ansprüche 1 bis 7, **dadurch gekennzeichnet, dass** die im Bekleidungsstück (15) vorgesehenen elektrischen Leiter durch elektrisch leitende Drähte (16), ein elektrisch leitendes Geflecht (17) und/oder durch eine elektrisch leitende Folie gebildet sind.

9. Elektrische Anlage (1a, 1b) nach einem der Ansprüche 1 bis 8, **dadurch gekennzeichnet, dass** die elektrischen Leiter (16, 17) des Bekleidungsstücks (15) mit einem Erdungspotential (13) verbunden sind.

10. Elektrische Anlage (1a, 1b) nach einem der Ansprüche 4 bis 7, **dadurch gekennzeichnet, dass** eine der beiden Messelektroden (4a, 4b) in den Fällen a) und b) mit einem Erdungspotential (13) verbunden ist oder eine mit einem Erdungspotential (13) verbundene Erdungselektrode (8) vorgesehen ist, welche für die Befestigung am menschlichen Körper ausgebildet ist.

11. Elektrische Anlage (1a, 1b) nach Anspruch 10, **dadurch gekennzeichnet, dass** die Erdungselektrode (8) auf einer Armbinde oder einer Beinbinde (9) angeordnet ist.

12. Elektrische Anlage (1a, 1b) nach einem der Ansprüche 4 bis 11, **dadurch gekennzeichnet, dass** die Messelektroden (4a, 4b) und/oder die Erdungselektrode (8) an der Innenseite eines Bekleidungsstücks (15) angeordnet sind.

13. Elektrische Anlage (1a, 1b) nach einem der Ansprüche 1 bis 12, **dadurch gekennzeichnet, dass** das Bekleidungsstück (15) als Handschuh, Jacke, Overall, Hose oder Schutzanzug ausgebildet ist.

14. Elektrische Anlage (1a, 1b) nach einem der Ansprüche 1 bis 13, **gekennzeichnet durch**
- zumindest eine mit dem Schutzschalter (3) wirkverbundene optische Auslöseeinrichtung (25a, 25b), welche dazu ausgebildet ist, den Schutzschalter (3) bei Erkennung eines Lichtbogens (L) auszulösen beziehungsweise auszuschalten,
- eine Detektionseinrichtung (26) zur Erkennung eines Zutritts oder eines Zutrittswunsches zu einem gesicherten Bereich der elektrischen Anlage (1a, 1b) und
- eine elektronische Schaltung (27), welche mit der Detektionseinrichtung (26) verbunden ist und eine Auslösung beziehungsweise ein Ausschalten des Schutzschalters (3) durch die zumindest eine optische Auslöseeinrichtung (25a, 25b) bei Erkennung eines Zutritts oder eines Zutrittswunsches ermöglicht und andernfalls verhindert, wobei
d) die Detektionseinrichtung (26) zur Erkennung eines Schließzustands einer Schaltschranktür (30) und/oder einer Zutrittstür zur elektrischen Anlage (1a, 1b) ausgebildet ist und die mit der Detektionseinrichtung (26) verbundene elektronische Schaltung (27) dazu ausgebildet ist, eine Auslösung beziehungsweise ein Ausschalten des Schutzschalters (3) durch die zumindest eine optische Auslöseeinrichtung (25a, 25b) im OFFEN-Zustand der Schaltschranktür (30) / Zutrittstür zu ermöglichen und im GESCHLOSSEN-Zustand der Schaltschranktür (30) / Zutrittstür zu verhindern und/oder
e) die Detektionseinrichtung (26) als manuell betätigbarer Zutrittsschalter zum Schaltschrank (2, 2a, 2b) und/oder zur elektrischen Anlage (1a, 1b) ausgebildet ist und die mit der Detektionseinrichtung (26) verbundene elektronische Schaltung (27) dazu ausgebildet ist, eine Auslösung beziehungsweise ein Ausschalten des Schutzschalters (3) durch die zumindest eine optische Auslöseeinrichtung (25a, 25b) bei betätigtem Zutrittsschalter zu ermöglichen und andernfalls zu verhindern und/oder
f) die Detektionseinrichtung (26) zur Erkennung der Anwesenheit der zumindest einen optischen Auslöseeinrichtung (25a, 25b) in einem Gefahrenbereich (A) der elektrischen Anlage (1a, 1b) ausgebildet ist und die mit der Detektionseinrichtung (26) verbundene elektronische Schaltung (27) dazu ausgebildet ist, eine Auslösung beziehungsweise ein Ausschalten des Schutzschalters (3) durch die zumindest eine optische Auslöseeinrichtung (1a, 1b) bei im Gefahrenbereich (A) anwesender optischer Auslöseeinrichtung (A) zu ermöglichen und andernfalls zu verhindern.

15. Elektrische Anlage (1a, 1b) nach Anspruch 14, **dadurch gekennzeichnet, dass** die elektronische Schaltung (27) als logische UND-Verknüpfung eines positiven Lichtbogensignals der optischen Auslöseeinrichtung (25a, 25b) und eines Zutritts-Signals der Detektionseinrichtung (26) ausgebildet ist oder als solche wirkt und ausgangsseitig mit dem Schutzschalter (3) wirkverbunden ist.

16. Elektrische Anlage (1a, 1b) nach Anspruch 14 oder 15, **dadurch gekennzeichnet, dass**
g) die zumindest eine optische Auslöseeinrichtung (25a) für die Befestigung am menschlichen Körper (7) ausgebildet ist oder
h) die zumindest eine optische Auslöseeinrichtung (25b) im Schaltschrank (2, 2a, 2b) oder außen am Schaltschrank (2, 2a, 2b) angeordnet ist oder
i) eine erste optische Auslöseeinrichtung (25a) für die Befestigung am menschlichen Körper (7) ausgebildet ist und eine zweite optische Auslöseeinrichtung (25b) im Schaltschrank (2, 2a, 2b) oder außen am Schaltschrank (2, 2a, 2b) angeordnet ist.

17. Elektrische Anlage (1a, 1b) nach Anspruch 16, **dadurch gekennzeichnet, dass** die zumindest eine (erste) optische Auslöseeinrichtung (25a) auf einem Helm (28), einer Armbinde (6a, 6b) und/oder auf einem Bekleidungsstück (29) angeordnet ist.

18. Elektrische Anlage (1a, 1b) nach einem der Ansprüche 1 bis 17, **dadurch gekennzeichnet, dass**
- der Steuerausgang der Spannungs-Messeinrichtung (5) / Strom-Messeinrichtung (14) und/oder der optischen Auslöseeinrichtung (25a, 25b) als drahtloser Sender ausgebildet ist oder mit einem drahtlosen Sender (10) verbunden ist,
- der Schalteingang des Schutzschalters (3) als drahtloser Empfänger ausgebildet ist oder mit einem drahtlosen Empfänger (11) verbunden ist und
- der drahtloser Sender (10) und der drahtloser Empfänger (11) zum Aufbau einer drahtlosen Verbindung ausgebildet sind.

19. Elektrische Anlage (1a, 1b) nach einem der Ansprüche 1 bis 17, **dadurch gekennzeichnet, dass** der Steuerausgang der Spannungs-Messeinrichtung (5) / Strom-Messeinrichtung (14) und/oder der optischen Auslöseeinrichtung (25a, 25b) elektrisch beziehungsweise drahtgebunden mit dem Schalteingang des Schutzschalters (3) verbunden ist.

20. Elektrische Anlage (1a, 1b) nach einem der Ansprüche 1 bis 19, **dadurch gekennzeichnet, dass** der Schaltschrank (2, 2a, 2b) für einen Betriebsstrom von zumindest 250 Ampere und/oder für eine Betriebsspannung von maximal 1000 VAC oder 1500 VDC ausgelegt ist.

21. Verfahren zur Sicherung einer elektrischen Anlage (1a, 1b), welche einen Schaltschrank (2, 2a, 2b) sowie einen im Schaltschrank (2, 2a, 2b) angeordneten Schutzschalter (3) umfasst,
**dadurch gekennzeichnet, dass**
- eine mit dem Schutzschalter (3) drahtlos oder drahtgebunden wirkverbundene Strom-Messeinrichtung (14) der elektrischen Anlage (1a, 1b) den über elektrische Leiter (16, 17) eines Bekleidungsstücks (15) fließenden Strom ermittelt, wobei beim Tragen des Bekleidungsstücks (15) von einer in der elektrischen Anlage (1a, 1b) befindlichen Person (7) ein Fehlerstrom im Wesentlichen über die elektrischen Leiter (16, 17) des Bekleidungsstücks (15) und nur zu einem geringen Teil über den Körper der genannten Person (7) fließt, und
- die Strom-Messeinrichtung (14) den Schutzschalter (3) auslöst beziehungsweise ausschaltet, wenn ein über einem Schwellwert liegender Messwert erkannt wird.

22. Verfahren nach Anspruch 21, **dadurch gekennzeichnet, dass** ein Bekleidungsstück (15) mit elektrischen Leitern (16, 17) am menschlichen Körper getragen wird und der über die elektrischen Leiter (16, 17) fließende Strom ermittelt wird.

23. Verfahren nach Anspruch 21 oder 22, **dadurch gekennzeichnet, dass** zusätzlich zwei Messelektroden (4a, 4b) am menschlichen Körper befestigt werden und
a) die am besagten Körper zwischen den Messelektroden (4a, 4b) abfallende Spannung oder
b) der zwischen den Messelektroden (4a, 4b) fließende Strom ermittelt wird.

24. Verfahren nach einem der Ansprüche 21 bis 23, **dadurch gekennzeichnet, dass** die elektrischen Leiter (16, 17) des Bekleidungsstücks (15) mit einem Erdungspotential (13) verbunden werden.

## Claims

1. Electrical installation (1a, 1b), comprising
- a switchgear cabinet (2, 2a, 2b) and
- a circuit breaker (3) arranged in the switchgear cabinet (2, 2a, 2b),
**characterized in that**
- the electrical installation (1a, 1b) comprises an item of clothing (15) with electrical conductors (16, 17) and a current measuring device (14) for measuring the current flowing via said electrical conductors (16), wherein when the item of clothing (15) is worn by a person (7) located in the electrical installation (1a, 1b), a fault current flows substantially via the electrical conductors (16, 17) of the item of clothing (15) and only to a small extent via the body of said person (7),
- the current measuring device (14) is operatively connected to the circuit breaker (3) in a wireless or wired manner and
- the current measuring device (14) is designed to trigger or switch off the circuit breaker (3) when a measurement value above a threshold value is detected.

2. Electrical installation (1a, 1b) according to claim 1, **characterized in that**
- the circuit breaker (3) has a switch input for triggering or switching off the circuit breaker (3),
- the current measuring device (14) has a control output which is connected to the switch input of the circuit breaker (3) and
- the current measuring device (14) is designed to change the state of the control output when a measurement value above a threshold value is detected and, as a result, to trigger or switch off the circuit breaker (3).

3. Electrical installation (1a, 1b) according to claim 1 or 2,
**characterized in that** the circuit breaker (3) is designed as a miniature circuit breaker (19, 23a..23c), as an arc short circuit switch (18a.. 8c) or as a combined miniature circuit breaker and arc short circuit switch.

4. Electrical installation (1a, 1b) according to any of claims 1 to 3, **characterized in that** it additionally comprises two measuring electrodes (4a, 4b) designed for attachment to the human body, and
a) a voltage measuring device (5) arranged therebetween for measuring the voltage between the measuring electrodes (4a, 4b) and/or
b) a current measuring device (14) arranged therebetween for measuring the current flowing between the measuring electrodes (4a, 4b).

5. Electrical installation (1a, 1b) according to claim 4, **characterized in that** one electrode (4a, 4b) each is arranged on an arm band/leg band (6a, 6b) or **in that** the two measuring electrodes (4a, 4b) are arranged at a distance from one another on a single arm band/leg band.

6. Electrical installation (1a, 1b) according to any of claims 1 to 5, **characterized in that**
- the electrical installation (1a, 1b) has a current measuring resistor (12) connected to the electrical conductors (16 17) of the item of clothing (15) and a voltage measuring device (5) for measuring the electrical voltage dropping across the current measuring resistor (12) and/or
- the current measuring device has a window-type transformer (14) for measuring an electromagnetic field induced by a current flowing through the electrical conductors (16, 17) of the item of clothing (15).

7. Electrical installation (1a, 1b) according to any of claims 4 to 6, **characterized in that**
- the electrical installation (1a, 1b) in case b) has a current measuring resistor (12) electrically connected to the measuring electrodes (4a, 4b) and a voltage measuring device (5) for measuring the electrical voltage dropping across the current measuring resistor (12) and/or
- the current measuring device has a window-type transformer (14) for measuring an electromagnetic field induced in case b) by a current flowing between the measuring electrodes (4a, 4b).

8. Electrical installation (1a, 1b) according to any of claims 1 to 7, **characterized in that** the electrical conductors provided in the item of clothing (15) are formed by electrically conductive wires (16), an electrically conductive braiding (17) and/or an electrically conductive film.

9. Electrical installation (1a, 1b) according to any of claims 1 to 8, **characterized in that** the electrical conductors (16, 17) of the item of clothing (15) are connected to a ground potential (13).

10. Electrical installation (1a, 1b) according to any of claims 4 to 7, **characterized in that** one of the two measuring electrodes (4a, 4b) in cases a) and b) is connected to a ground potential (13) or a grounding electrode (8) connected to a ground potential (13) is provided which is designed for attachment to the human body.

11. Electrical installation (1a, 1b) according to claim 10, **characterized in that** the grounding electrode (8) is arranged on an arm band or a leg band (9).

12. Electrical installation (1a, 1b) according to any of claims 4 to 11, **characterized in that** the measuring electrodes (4a, 4b) and/or the grounding electrode (8) are arranged on the inside of an item of clothing (15).

13. Electrical installation (1a, 1b) according to any of claims 1 to 12, **characterized in that** the item of clothing (15) is designed as a glove, jacket, overall, trousers or protective suit.

14. Electrical installation (1a, 1b) according to any of claims 1 to 13, **characterized by**
- at least one optical trigger device (25a, 25b) which is operatively connected to the circuit breaker (3) and is designed to trigger or switch off the circuit breaker (3) when an arc (L) is detected,
- a detection device (26) for detecting access or an access request to a secured region of the electrical installation (1a, 1b) and
- an electronic circuit (27) which is connected to the detection device (26) and allows or otherwise prevents triggering or switching off of the circuit breaker (3) by the at least one optical trigger device (25a, 25b) when access or an access request is detected, wherein
d) the detection device (26) is designed to detect a closing state of a switchgear cabinet door (30) and/or an access door for the electrical installation (1a, 1b), and the electronic circuit (27) connected to the detection device (26) is designed to allow triggering or switching off of the circuit breaker (3) by the at least one optical trigger device (25a, 25b) in the OPEN state of the switchgear cabinet door (30) / access door and to prevent same in the CLOSED state of the switchgear cabinet door (30) / access door and/or
e) the detection device (26) is designed as a manually operable access switch to the switchgear cabinet (2, 2a, 2b) and/or to the electrical installation (1a, 1b), and the electronic circuit (27) connected to the detection device (26) is designed to allow and otherwise prevent triggering or switching off of the circuit breaker (3) by the at least one optical trigger device (25a, 25b) when the access switch is operated and/or
f) the detection device (26) is designed to detect the presence of the at least one optical trigger device (25a, 25b) in a danger region (A) of the electrical installation (1a, 1b), and the electronic circuit (27) connected to the detection device (26) is designed to allow and otherwise prevent triggering or switching off of the circuit breaker (3) by the at least one optical trigger device (1a, 1b) if the optical trigger device (A) is present in the danger region (A).

15. Electrical installation (1a, 1b) according to claim 14, **characterized in that** the electronic circuit (27) is designed as a logical AND link of a positive arc signal of the optical trigger device (25a, 25b) and an access signal of the detection device (26) or acts as such and is operatively connected to the circuit breaker (3) on the output side.

16. Electrical installation (1a, 1b) according to claim 14 or 15,
**characterized in that**
g) the at least one optical trigger device (25a) is designed for attachment to the human body (7) or
h) the at least one optical trigger device (25b) is arranged in the switchgear cabinet (2, 2a, 2b) or on the outside of the switchgear cabinet (2, 2a, 2b) or
i) a first optical trigger device (25a) is designed for attachment to the human body (7) and a second optical trigger device (25b) is arranged in the switchgear cabinet (2, 2a, 2b) or on the outside of the switchgear cabinet (2, 2a, 2b).

17. Electrical installation (1a, 1b) according to claim 16, **characterized in that** the at least one (first) optical trigger device (25a) is arranged on a helmet (28), an arm band (6a, 6b) and/or on an item of clothing (29).

18. Electrical installation (1a, 1b) according to any of claims 1 to 17, **characterized in that**
- the control output of the voltage measuring device (5) / current measuring device (14) and/or of the optical trigger device (25a, 25b) is designed as a wireless transmitter or is connected to a wireless transmitter (10),
- the switch input of the circuit breaker (3) is designed as a wireless receiver or is connected to a wireless receiver (11), and
- the wireless transmitter (10) and the wireless receiver (11) are designed to establish a wireless connection.

19. Electrical installation (1a, 1b) according to any of claims 1 to 17, **characterized in that** the control output of the voltage measuring device (5) / current measuring device (14) and/or of the optical trigger device (25a, 25b) is connected electrically or in a wired manner to the switch input of the circuit breaker (3).

20. Electrical installation (1a, 1b) according to any of claims 1 to 19, **characterized in that** the switchgear cabinet (2, 2a, 2b) is designed for an operating current of at least 250 amperes and/or for an operating voltage of at most 1000 VAC or 1500 VDC.

21. Method for securing an electrical installation (1a, 1b) which comprises a switchgear cabinet (2, 2a, 2b) and a circuit breaker (3) arranged in the switchgear cabinet (2, 2a, 2b),
**characterized in that**
- a current measuring device (14) of the electrical installation (1a, 1b), which is operatively connected to the circuit breaker (3) in a wireless or wired manner, determines the current flowing via electrical conductors (16, 17) of an item of clothing (15), wherein when the item of clothing (15) is worn by a person (7) located in the electrical installation (1a, 1b), a fault current flows substantially via the electrical conductors (16, 17) of the item of clothing (15) and only to a small extent via the body of said person (7), and
- the current measuring device (14) triggers or switches off the circuit breaker (3) when a measurement value above a threshold value is detected.

22. Method according to claim 21, **characterized in that** an item of clothing (15) with electrical conductors (16, 17) is worn on the human body and the current flowing via the electrical conductors (16, 17) is determined.

23. Method according to claim 21 or 22, **characterized in that** two measuring electrodes (4a, 4b) are additionally attached to the human body, and
a) the voltage dropping between the measuring electrodes (4a, 4b) on said body or
b) the current flowing between the measuring electrodes (4a, 4b) is determined.

24. Method according to any of claims 21 to 23, **characterized in that** the electrical conductors (16, 17) of the item of clothing (15) are connected to a ground potential (13).

## Revendications

1. Installation électrique (1a, 1b), comprenant
- une armoire de distribution (2, 2a, 2b) et
- un disjoncteur de protection (3) disposé dans l'armoire de distribution (2, 2a, 2b),
**caractérisé en ce que**
- l'installation électrique (1a, 1b) comprend un vêtement (15) comportant des conducteurs électriques (16, 17) et un dispositif de mesure de courant (14) permettant de mesurer le courant circulant à travers lesdits conducteurs électriques (16), lorsque le vêtement (15) est porté par une personne (7) se trouvant dans l'installation électrique (1a, 1b), un courant de défaut circulant sensiblement à travers les conducteurs électriques (16, 17) du vêtement (15) et seulement en petite partie à travers le corps de ladite personne (7),
- le dispositif de mesure de courant (14) étant connecté de manière fonctionnelle au disjoncteur de protection (3) sans fil ou par fil et
- le dispositif de mesure de courant (14) étant configuré pour déclencher ou désactiver le disjoncteur de protection (3) lors de la détection d'une valeur de mesure supérieure à une valeur seuil.

2. Installation électrique (1a, 1b) selon la revendication 1,
**caractérisée en ce que**
- le disjoncteur de protection (3) présente une entrée de commutation permettant de déclencher ou de désactiver le disjoncteur de protection (3),
- le dispositif de mesure de courant (14) présente une sortie de commande qui est connectée à l'entrée de commutation du disjoncteur de protection (3) et
- le dispositif de mesure de courant (14) est configuré pour modifier l'état de la sortie de commande lors de la détection d'une valeur de mesure supérieure à une valeur seuil et pour ensuite déclencher ou désactiver le disjoncteur de protection (3).

3. Installation électrique (1a, 1b) selon la revendication 1 ou 2,
**caractérisée en ce que** le disjoncteur de protection (3) est conçu en tant que disjoncteur de protection de ligne électrique (19, 23a..23c), que disjoncteur de court-circuit d'arc électrique (18a..18c) ou que disjoncteur de ligne électrique et de court-circuit d'arc électrique combiné.

4. Installation électrique (1a, 1b) selon l'une quelconque des revendications 1 à 3, **caractérisée en ce que** celle-ci comprend en outre deux électrodes de mesure (4a, 4b) configurées pour être fixées au corps humain et
a) un dispositif de mesure de tension (5) disposé entre elles pour la mesure de la tension se trouvant entre les électrodes de mesure (4a, 4b) et/ou
b) un dispositif de mesure de courant (14) disposé entre elles pour la mesure du courant circulant entre les électrodes de mesure (4a, 4b).

5. Installation électrique (1a, 1b) selon la revendication 4,
**caractérisée en ce que** respectivement une électrode (4a, 4b) est disposée sur respectivement un brassard/bracelet de jambe (6a, 6b) ou **en ce que** les deux électrodes de mesure (4a, 4b) sont disposées à distance l'une de l'autre sur un seul brassard/bracelet de jambe.

6. Installation électrique (1a, 1b) selon l'une quelconque des revendications 1 à 5, **caractérisée en ce que**
- l'installation électrique (1a, 1b) présente une résistance de mesure de courant (12) connectée aux conducteurs électriques (16 17) du vêtement (15) ainsi qu'un dispositif de mesure de tension (5) permettant de mesurer la tension électrique diminuant au niveau de la résistance de mesure de courant (12) et/ou
- le dispositif de mesure du courant présente un transducteur traversant (14) permettant de mesurer un champ électromagnétique provoqué par un courant circulant à travers les conducteurs électriques (16, 17) du vêtement (15).

7. Installation électrique (1a, 1b) selon l'une quelconque des revendications 4 à 6, **caractérisée en ce que**
- l'installation électrique (1a, 1b), dans le cas b), présente une résistance de mesure de courant (12) connectée électriquement aux électrodes de mesure (4a, 4b) ainsi qu'un dispositif de mesure de tension (5) permettant de mesurer la tension électrique diminuant au niveau de la résistance de mesure de courant (12) et/ou
- le dispositif de mesure de courant présente un transducteur traversant (14) permettant de mesurer un champ électromagnétique qui, dans le cas b), est provoqué par un courant circulant entre les électrodes de mesure (4a, 4b).

8. Installation électrique (1a, 1b) selon l'une quelconque des revendications 1 à 7, **caractérisée en ce que** les conducteurs électriques prévus dans le vêtement (15) sont formés par des fils électriquement conducteurs (16), une tresse électriquement conductrice (17) et/ou par une feuille électriquement conductrice.

9. Installation électrique (1a, 1b) selon l'une quelconque des revendications 1 à 8, **caractérisée en ce que** les conducteurs électriques (16, 17) du vêtement (15) sont connectés à un potentiel de mise à la terre (13).

10. Installation électrique (1a, 1b) selon l'une quelconque des revendications 4 à 7, **caractérisée en ce que** l'une des deux électrodes de mesure (4a, 4b), dans les cas a) et de b) est connectée à un potentiel de mise à la terre (13) ou une électrode de mise à la terre (8) connectée à un potentiel de mise à la terre (13) est prévue, laquelle est conçue pour être fixée au corps humain.

11. Installation électrique (1a, 1b) selon la revendication 10,
**caractérisée en ce que** l'électrode de mise à la terre (8) est disposée sur un brassard ou un bracelet de jambe (9).

12. Installation électrique (1a, 1b) selon l'une quelconque des revendications 4 à 11, **caractérisée en ce que** les électrodes de mesure (4a, 4b) et/ou l'électrode de mise à la terre (8) sont disposées sur la face intérieure d'un vêtement (15).

13. Installation électrique (1a, 1b) selon l'une quelconque des revendications 1 à 12, **caractérisée en ce que** le vêtement (15) est conçu en tant que gant, veste, combinaison, pantalon ou tenue de protection.

14. Installation électrique (1a, 1b) selon l'une quelconque des revendications 1 à 13, **caractérisée par**
- au moins un dispositif de déclenchement optique (25a, 25b) connecté de manière fonctionnelle au disjoncteur de protection (3) et configuré pour déclencher ou désactiver le disjoncteur de protection (3) lors de la détection d'un arc électrique (L),
- un dispositif de détection (26) permettant de détecter un accès ou une demande d'accès à une zone sécurisée de l'installation électrique (1a, 1b) et
- un circuit électronique (27) qui est connecté au dispositif de détection (26) et qui permet ou sinon empêche un déclenchement ou une désactivation du disjoncteur de protection (3) par l'au moins un dispositif de déclenchement optique (25a, 25b) lors de la détection d'un accès ou d'une demande d'accès,
d) le dispositif de détection (26) étant configuré pour la détection d'un état de fermeture d'une porte d'armoire de distribution (30) et/ou d'une porte d'accès à l'installation électrique (1a, 1b) et le circuit électronique (27) connecté au dispositif de détection (26) étant configuré pour permettre un déclenchement ou une désactivation du disjoncteur de protection (3) par l'au moins un dispositif de déclenchement optique (25a, 25b) à l'état OUVERT de la porte d'armoire de distribution (30)/porte d'accès et pour l'empêcher à l'état FERMÉ de la porte d'armoire de distribution (30)/porte d'accès et/ou
e) le dispositif de détection (26) étant conçu en tant que disjoncteur d'accès à l'armoire de distribution (2, 2a, 2b) et/ou à l'installation électrique (1a, 1b) pouvant être actionné manuellement et le circuit électronique (27) connecté au dispositif de détection (26) étant configuré pour permettre ou sinon empêcher un déclenchement ou une désactivation du disjoncteur de protection (3) par l'au moins un dispositif de déclenchement optique (25a, 25b) lorsque le disjoncteur d'accès est actionné et/ou
f) le dispositif de détection (26) étant configuré pour la détection de la présence de l'au moins un dispositif de déclenchement optique (25a, 25b) dans une zone de danger (A) de l'installation électrique (1a, 1b) et le circuit électronique (27) connecté au dispositif de détection (26) étant configuré pour permettre ou sinon empêcher un déclenchement ou une désactivation du disjoncteur de protection (3) par l'au moins un dispositif de déclenchement optique (1a, 1b) lorsque le dispositif de déclenchement optique (A) est présent dans la zone de danger (A).

15. Installation électrique (1a, 1b) selon la revendication 14,
**caractérisée en ce que** le circuit électronique (27) est conçu en tant que combinaison ET logique d'un signal d'arc électrique positif du dispositif de déclenchement optique (25a, 25b) et d'un signal d'accès du dispositif de détection (26) ou agit comme tel et est connecté de manière fonctionnelle au disjoncteur de protection (3) côté sortie.

16. Installation électrique (1a, 1b) selon la revendication 14 ou 15,
**caractérisée en ce que**
g) l'au moins un dispositif de déclenchement optique (25a) est conçu pour être fixé au corps humain (7) ou
h) l'au moins un dispositif de déclenchement optique (25b) est disposé dans l'armoire de distribution (2, 2a, 2b) ou à l'extérieur de l'armoire de distribution (2, 2a, 2b) ou
i) un premier dispositif de déclenchement optique (25a) est conçu pour être fixé au corps humain (7) et un second dispositif de déclenchement optique (25b) est disposé dans l'armoire de distribution (2, 2a, 2b) ou à l'extérieur de l'armoire de distribution (2, 2a, 2b).

17. Installation électrique (1a, 1b) selon la revendication 16,
**caractérisée en ce que** l'au moins un (premier) dispositif de déclenchement optique (25a) est disposé sur un casque (28), un brassard (6a, 6b) et/ou sur un vêtement (29).

18. Installation électrique (1a, 1b) selon l'une quelconque des revendications 1 à 17, **caractérisée en ce que**
- la sortie de commande du dispositif de mesure de tension (5)/dispositif de mesure de courant (14) et/ou du dispositif de déclenchement optique (25a, 25b) est conçue en tant que transmetteur sans fil ou est connectée à un transmetteur sans fil (10),
- l'entrée de commutation du disjoncteur de protection (3) est conçue en tant que récepteur sans fil ou est connectée à un récepteur sans fil (11), et
- le transmetteur sans fil (10) et le récepteur sans fil (11) sont conçus pour établir une liaison sans fil.

19. Installation électrique (1a, 1b) selon l'une quelconque des revendications 1 à 17, **caractérisée en ce que** la sortie de commande du dispositif de mesure de tension (5)/dispositif de mesure de courant (14) et/ou du dispositif de déclenchement optique (25a, 25b) est connectée électriquement ou par fil à l'entrée de commutation du disjoncteur de protection (3).

20. Installation électrique (1a, 1b) selon l'une quelconque des revendications 1 à 19, **caractérisée en ce que** l'armoire de distribution (2, 2a, 2b) est conçue pour un courant de service d'au moins 250 ampères et/ou pour une tension de service d'au plus 1000 VCA ou 1500 VCC.

21. Procédé permettant de sécuriser une installation électrique (1a, 1b), laquelle comprend une armoire de distribution (2, 2a, 2b) et un disjoncteur de protection (3) disposé dans l'armoire de distribution (2, 2a, 2b),
**caractérisé en ce que**
- un dispositif de mesure de courant (14) de l'installation électrique (1a, 1b) connecté de manière fonctionnelle, sans fil ou par fil, au disjoncteur de protection (3) détermine le courant circulant à travers des conducteurs électriques (16, 17) d'un vêtement (15), lorsque le vêtement (15) est porté par une personne (7) se trouvant dans l'installation électrique (1a, 1b), un courant de défaut circulant sensiblement à travers les conducteurs électriques (16, 17) du vêtement (15) et seulement en petite partie à travers le corps de ladite personne (7),
- le dispositif de mesure de courant (14) déclenche ou désactive le disjoncteur de protection (3) lorsqu'une valeur de mesure supérieure à une valeur seuil est détectée.

22. Procédé selon la revendication 21, **caractérisé en ce qu'**un vêtement (15) comportant des conducteurs électriques (16, 17) est porté sur le corps humain et le courant circulant à travers les conducteurs électriques (16, 17) est détecté.

23. Procédé selon la revendication 21 ou 22, **caractérisé en ce que** deux électrodes de mesure (4a, 4b) sont en outre fixées au corps humain et
a) la tension diminuant entre les électrodes de mesure (4a, 4b) au niveau dudit corps ou
b) le courant circulant entre les électrodes de mesure (4a, 4b) est déterminé.

24. Procédé selon l'une quelconque des revendications 21 à 23,
**caractérisé en ce que** les conducteurs électriques (16, 17) du vêtement (15) sont connectés à un potentiel de mise à la terre (13).
